(19) **Europäisches Patentamt**

**European Patent Office**

**Office européen des brevets**

(11) **EP 4 742 564 A1**

(12) **EUROPEAN PATENT APPLICATION**
published in accordance with Art. 153(4) EPC

(43) Date of publication:
**13.05.2026 Bulletin 2026/20**

(21) Application number: **23945185.9**

(22) Date of filing: **07.07.2023**

(51) International Patent Classification (IPC):
**H04L 1/00** $^{(2006.01)}$       **G06F 40/30** $^{(2020.01)}$
**G06N 20/00** $^{(2019.01)}$

(52) Cooperative Patent Classification (CPC):
**G06F 40/30; G06N 20/00; H04L 1/00**

(86) International application number:
**PCT/KR2023/009660**

(87) International publication number:
**WO 2025/013956 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Electronics Inc.**
**Yeongdeungpo-gu**
**Seoul 07336 (KR)**

(72) Inventors:
• **KWON, Soonhee**
  **Seoul 06772 (KR)**
• **LEE, Sangrim**
  **Seoul 06772 (KR)**
• **JUNG, Ikjoo**
  **Seoul 06772 (KR)**
• **LEE, Taehyun**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **DEVICE AND METHOD FOR PERFORMING SEMANTIC COMMUNICATION IN WIRELESS COMMUNICATION SYSTEM**

(57)   The present disclosure relates to a device and method for performing semantic communication in a wireless communication system. The method performed by a first device may comprise the steps of: receiving a synchronization signal; receiving control information from a second device; and transmitting, to the second device, at least one task-specific semantic representation (SR) related to at least one task indicated by the second device among SRs generated by an encoder supporting a plurality of tasks, the at least one task-specific SR having been processed on the basis of an index for the at least one task.

FIG. 20

Description

**TECHNICAL FIELD**

The following description relates to a wireless communication system, including a method for performing semantic communication in the wireless communication system, and a device supporting the same.

**BACKGROUND ART**

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication devices require a large communication capacity, an enhanced mobile broadband (eMBB) communication technology has been proposed compared to radio access technology (RAT). In addition, not only massive machine type communications (MTC) for providing various services anytime anywhere by connecting a plurality of devices and things but also communication systems considering services/user equipments (UEs) sensitive to reliability and latency have been proposed. To this end, various technical configurations have been proposed.

**DISCLOSURE**

**TECHNICAL PROBLEM**

The present disclosure may provide a method for effectively transmitting and receiving semantic information of a message in a wireless communication system and a device supporting the same.

The present disclosure may provide a method for performing semantic communication based on multi-task in a wireless communication system and a device supporting the same.

The present disclosure may provide a method for adaptively adjusting a length of a semantic representation (SR) to be transmitted and received in a wireless communication system and a device supporting the same.

The present disclosure may provide a method for selecting an SR based on task information to be performed for semantic communication in a wireless communication system and a device supporting the same.

The present disclosure may provide a method for controlling the transmission order of SRs based on the priorities of a plurality of tasks for semantic communication in a wireless communication system and a device supporting the same.

The present disclosure may provide a method for determining an index of SR of a plurality of tasks for semantic communication in a wireless communication system and a device supporting the same.

The present disclosure may provide a method for determining a difficulty of a plurality of tasks in a wireless communication system and a device supporting the same.

The present disclosure may provide a method for assigning SR indexes to a plurality of tasks based on the difficulty of a plurality of tasks for semantic communication in a wireless communication system and a device supporting the same.

The present disclosure may provide a method for performing learning for a semantic decoder and a semantic encoder that support multi-tasks in a wireless communication system and a device supporting the same

The technical objects to be achieved in the present disclosure are not limited to the above-mentioned technical objects, and other technical objects that are not mentioned may be considered by those skilled in the art through the embodiments of the present disclosure described below.

**TECHNICAL SOLUTION**

As an example of the present disclosure, provided is a method performed by a first device in a wireless communication system. The method may comprise: receiving a synchronization signal; receiving control information from a second device; transmitting, as at least one task-specific semantic presentation (SR) related to at least one task indicated by the second device among SRs generated by an encoder supporting a plurality of tasks, at least one processed SR based on an index for the at least one task to the second device.

As an example of the present disclosure, provided is a method performed by a second device in a wireless communication system. The method may comprise: transmitting a synchronization signal; transmitting system information; transmitting control information to a first device; receiving, as at least one task-specific semantic presentation (SR) related to at least one task indicated by the second device among SRs generated by the first device supporting a plurality of tasks, at least one processed SR based on an index for the at least one task from the first device.

As an example of the present disclosure, provided is a first device in a wireless communication system. The first device may comprise: a transceiver; and a processor connected to the transceiver, wherein the processor is configured to: receive a synchronization signal; receive control information from a second device; transmit, as at least one task-specific semantic presentation (SR) related to at least one task indicated by the second device among SRs generated by an encoder supporting a plurality of tasks, at least one processed SR based on an index for the at least one task to the second device.

As an example of the present disclosure, provided is a second device in a wireless communication system. The second device may comprise: a transceiver; and a processor connected to the transceiver, wherein the processor is configured to: transmit a synchronization signal; transmit control information to a first device; receive, as at least one task-specific semantic presentation (SR) related to at least one task indicated by the second device among SRs generated by the first device supporting a plurality of tasks, at least one processed SR based on an index for the at least one task from the first device.

As an example of the present disclosure, provided is a communication device. The communication device may comprise: at least one processor; at least one computer memory connected to the at least one processor and storing instructions for instructing operations based on being executed by the at least one processor, wherein the operations comprise: receiving a synchronization signal; receiving control information from a second device; transmitting, as at least one task-specific semantic presentation (SR) related to at least one task indicated by the second device among SRs generated by an encoder supporting a plurality of tasks, at least one processed SR based on an index for the at least one task to the second device.

As an example of the present disclosure, provided is a non-transitory computer-readable medium storing at least one instruction. The non-transitory computer-readable medium may comprise: the at least one instruction executable by a processor, wherein the at least one instruction controls a device to: receive a synchronization signal; receive control information from a second device; transmit, as at least one task-specific semantic presentation (SR) related to at least one task indicated by the second device among SRs generated by an encoder supporting a plurality of tasks, at least one processed SR based on an index for the at least one task to the second device.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

## ADVANTAGEOUS EFFECTS

As is apparent from the above description, the embodiments of the present disclosure have the following effects.

Based on the present disclosure, the efficiency of sematic communication can be improved.

It will be appreciated by those skilled in the art that the effects that can be achieved through the embodiments of the present disclosure are not limited to those described above, and that other advantageous effects of the present disclosure will be more clearly understood from the following detailed description. That is, unintended effects according to implementation of the present disclosure may be derived by those skilled in the art from the embodiments of the present disclosure.

## BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 shows an example of a communication system applicable to the present disclosure.

FIG. 2 shows an example of a wireless device applicable to the present disclosure.

FIG. 3 shows a method of processing a transmitted signal applicable to the present disclosure.

FIG. 4 shows a communication procedure between a terminal and a base station applicable to the present disclosure.

FIG. 5 shows an example of a communication structure providable in a 6th generation (6G) system applicable to the present disclosure.

FIG. 6 shows an electromagnetic spectrum applicable to the present disclosure.

FIG. 7 shows a THz wireless communication transceiver applicable to the present disclosure.

FIG. 8 shows a THz signal generation method applicable to the present disclosure.

FIG. 9 shows a wireless communication transceiver applicable to the present disclosure.

FIG. 10 shows a transmitter structure applicable to the present disclosure.

FIG. 11 shows a modulator structure applicable to the present disclosure.

FIG. 12 shows a perceptron structure included in an artificial neural network applicable to the present disclosure.

FIG. 13 shows an artificial neural network structure applicable to the present disclosure.

FIG. 14 shows an example of a functional framework for applying artificial intelligence technology applicable to the present disclosure.

FIG. 15 shows an example of a procedure for utilizing an artificial intelligence model applicable to the present disclosure.

FIG. 16 shows another example of a procedure for utilizing an artificial intelligence model applicable to the present disclosure.

FIG. 17 shows another example of a procedure for utilizing an artificial intelligence model applicable to the present disclosure.

FIG. 18 shows a communication procedure based on an AI technology applicable to the present disclosure.

FIG. 19 shows a communication model applicable to the present disclosure.

FIG. 20 shows an example of a semantic communication framework applicable to the present disclosure.

FIG. 21 shows an example of a multi-task-oriented semantic communication method applicable to the present disclosure.

FIG. 22 shows an example of an unified multi-task semantic communication method using domain adaptation applicable to the present disclosure.

FIG. 23 shows an example of a domain adaptation module applicable to the present disclosure.

FIG. 24 shows an example of a Venn diagram of a semantic representation index based on an embodiment of the present disclosure.

FIG. 25a shows an example of a semantic encoder structure based on an embodiment of the present disclosure.

FIG. 25b shows an example of a semantic decoder structure based on an embodiment of the present disclosure.

FIG. 26 shows an example of a semantic communication framework using semantic representation adaptation based on an embodiment of the present disclosure.

FIG. 27 shows an example of a procedure for transmitting a signal based on an embodiment of the present disclosure.

FIG. 28 shows an example of a procedure for transmitting a semantic representation based on an embodiment of the present disclosure.

FIG. 29 shows a specific example of a procedure for transmitting a semantic representation based on an embodiment of the present disclosure.

FIG. 30 shows an example of a procedure for receiving a signal based on an embodiment of the present disclosure.

FIG. 31 shows an example of a procedure for semantic communication between devices based on an embodiment of the present disclosure.

FIG. 32 shows another example of a procedure for semantic communication between devices based on an embodiment of the present disclosure.

FIG. 33 shows another example of a procedure for semantic communication between devices based on an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, the embodiment(s) of the present disclosure may be constructed by combining parts of the elements and/or features. Operation orders described in the embodiment(s) of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNB (eNode B), a gNB (gNode B), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

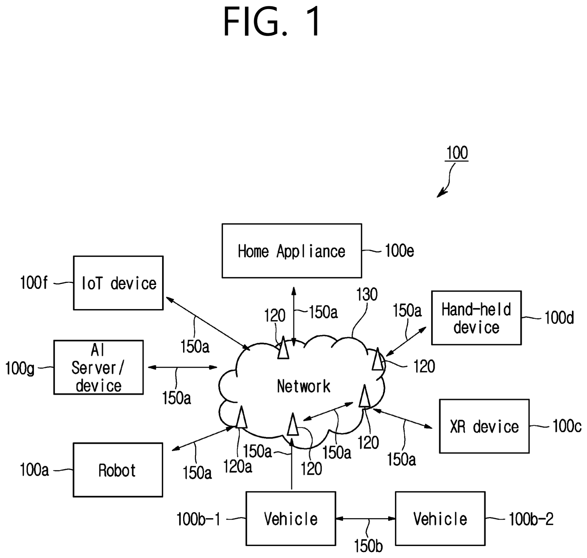

FIG. 1 shows an example of a communication system applicable to the present disclosure.

Referring to FIG. 1, the communication system 100 applicable to the present disclosure includes a wireless device, a base station and a network. The wireless device refers to a device for performing communication using radio access technology (e.g., LTE, LTE-A, LTE-A pro, NR or 5G, 5G-A, 6G) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network, a 5G (e.g., NR) network or a 6G network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/ connections 150a, 150b, 150c may be established between the wireless devices 100a to 100f/the base station 120 and the base station 120/the base station 120. Here, wireless communication/connection may be established through various radio access technologies such as uplink/downlink communication 150a, sidelink communication 150b (or D2D communication) or communication 150c between base stations (e.g., relay, integrated access backhaul (IAB). The wireless device and the base station/wireless device, the base station and the base station may transmit/receive radio signals to/from each other through wireless communication/ connection 150a, 150b, 150c. For example, wireless communication/ connection 150a, 150b, 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Device Applicable to the Present Disclosure

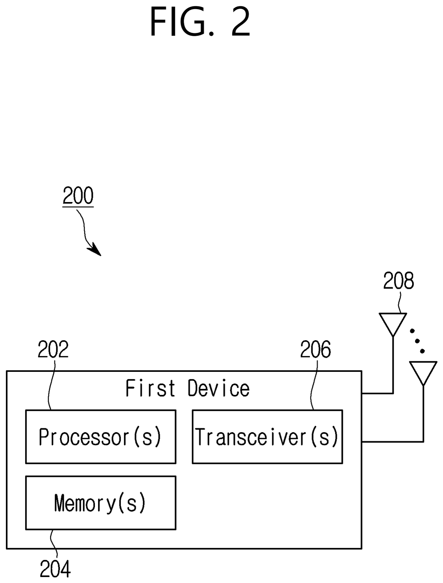

FIG. 2 shows an example of a wireless device applicable to the present disclosure.

Referring to FIG. 2, a wireless device 200 may transmit and receive radio signals through various radio access technologies (e.g., LTE, LTE-A, LTE-A pro, NR, 5G, 5G-A, 6G). The wireless device 200 includes at least one processor 202 and at least one memory 204, and may further include at least one transceiver 206 and/or at least one antenna 208.

The processor 202 may be configured to control the memory 204 and/or the transceiver 206 and to implement descriptions, functions, procedures, proposals, methods and/or operational flowcharts disclosed herein. For example, the processor 202 may process information in the memory 204 to generate first information/signal and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be coupled with the processor 202, and store a variety of information related to operation of the processor 202. For example, the memory 204 may store software code including instructions for performing all or some of the processes controlled by the processor 202 or performing the descriptions, functions, procedures, proposals, methods and/or operational flowcharts disclosed herein. Here, the processor 202 and the memory 204 may be part of a communication modem/circuit/chip designed to implement wireless communication technology. The transceiver 206 may be coupled with the processor 202 to transmit and/or receive radio signals through at least one antenna 208. The transceiver 206 may include a transmitter and/or a receiver. The transceiver 206 may be used interchangeably with a radio frequency (RF) unit. In the present disclosure, the wireless device may refer to a communication modem/circuit/chip.

Hereinafter, hardware elements of the wireless device 200 will be described in greater detail. Without being limited thereto, at least one protocol layer may be implemented by at least one processor 202. For example, at least one processor 202 may implement at least one layer (e.g., functional layers such as physical (PHY), media access control (MAC), radio link control (RLC), packet data convergence protocol (PDCP), radio resource control (RRC), service data adaptation protocol (SDAP)). At least one processor 202 may generate at least one protocol data unit (PDU) and/or at least one service data unit (SDU) according to the descriptions, functions, procedures, proposals, methods and/or operational flowcharts disclosed herein. At least one processor 202 may generate messages, control information, data or information according to the descriptions, functions, procedures, proposals, methods and/or operational flowcharts disclosed herein. At least one processor 202 may generate PDUs, SDUs, messages, control information, data or information according to the functions, procedures, proposals and/or methods disclosed herein and provide the PDUs, SDUs, messages, control information, data or information to at least one transceiver 206. At least one processor 202 may receive signals (e.g., baseband signals) from at least one transceiver 206 and acquire PDUs, SDUs, messages, control information, data or information according to the descriptions, functions, procedures, proposals, methods and/or operational flowcharts disclosed herein.

At least one processor 202 may be referred to as controllers, microcontrollers, microprocessors or microcomputers. At least one processor 202 may be implemented by hardware, firmware, software or a combination thereof. For example, at least one application specific integrated circuit (ASIC), at least one digital signal processor (DSP), at least one digital signal processing device (DSPD), at least one programmable logic device (PLD) or at least one field programmable gate array (FPGAs) may be included in at least one processor 202. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in at least one processor 202 or stored in at least one memory 204 to be driven by at least one processor 202. The descriptions, functions, procedures, proposals, methods and/or operational flowcharts disclosed herein implemented using firmware or software in the form of code, a command and/or a set of commands.

At least one memory 204 may be coupled with at least one processor 202 to store various types of data, signals, messages, information, programs, code, instructions and/or commands. At least one memory 204 may be composed of read only memories (ROMs), random access memories (RAMs), erasable programmable read only memories (EPROMs), flash memories, hard drives, registers, cache memories, computer-readable storage mediums and/or combinations thereof. At least one memory 204 may be located inside and/or outside at least one processor 202. In addition, at least one memory 204 may be coupled with at least one processor 202 through various technologies such as wired or wireless connection.

At least one transceiver 206 may transmit user data, control information, radio signals/channels, etc. described in the methods and/or operational flowcharts of the present disclosure to at least one other device. At least one transceiver 206 may receive user data, control information, radio signals/channels, etc. described in the methods and/or operational flowcharts of the present disclosure from at least one other device. For example, at least one transceiver 206 may be coupled with at least one processor 202 to transmit/receive radio signals. For example, at least one processor 202 may perform control such that at least one transceiver 206 transmit user data, control information or radio signals to at least one other device. In addition, at least one processor 202 may perform control such that at least one transceiver 206 receive user data, control information or radio signals from at least one other device. In addition, at least one transceiver 206 may be coupled with at least one antenna 208, and at least one transceiver 206 may be configured to transmit/receive user data, control information, radio signals/channels, etc. described in the descriptions, functions, procedures, proposals, methods and/or operational flowcharts disclosed herein through at least one antenna 208. In the present disclosure, at least one antenna may be a plurality of physical antennas or a plurality of logical antennas (e.g., antenna ports). At least one transceiver 206 may convert the received radio signals/channels, etc. from RF band signals to baseband signals, in order to process the received user data, control information, radio signals/channels, etc. using at least one processor 202. At least one transceiver 206 may convert the user data, control information, radio signals/channels processed using at least one processor 202 from baseband signals into RF band signals. To this end, at least one transceiver 206 may include (analog) oscillator and/or filters.

Referring to FIG. 2, components of a wireless device described may be referred to by different terms in terms of functionality. For example, the processor 202 may be referred to as a controller, the transceiver 206 may be referred to as a communication unit, and the memory 204 may be referred to as a storage unit. In some cases, the communication unit may be used to mean including at least a part of the processor 202 and the transceiver 206.

Referring to FIG. 2, a structure of a wireless device described may be understood as at least a part of the structure of various devices. For example, the structure of the wireless device shown in FIG. 2 may be at least a part of the various devices described with reference to FIG. 1 (e.g., a robot 100a, vehicles 100b-1, 100b-2, an XR device 100c, a hand-held device 100d, a home appliance 100e, an IoT device 100f, an AI device/server 100g). Furthermore, based on various embodiments, in addition to the components shown in FIG. 2, the device may further include other components.

For example, the device may be a hand-held device such as a smartphone, a smart pad, a wearable device (e.g., a smart watch, smart glasses), or a hand-held computer (e.g., a laptop, etc.). In this case, the device may further include at least one of an input/output unit for inputting and outputting video information/signals, audio information/signals, data, and/or information input by a user, a power supply unit that supplies power and includes a wired/wireless charging circuit, a battery, etc., an interface unit including at least one port (e.g., an audio input/output port, a video input/output port) for connection with another device.

For example, the device may be a mobile device such as a mobile robot, a vehicle, a train, a manned/unmanned aerial vehicle (AV), a ship, etc. In this case, the device may further include at least one of a position measurement unit that acquires location information of the mobile device through a GPS (global positioning system), various sensors, a driving unit including at least one of an engine, a motor, a power train, wheels, brakes, a steering device of the device, a power supply unit that supplies power and includes a wired/wireless charging circuit, a battery, etc., a sensor unit that senses state information, environmental information, user information of or around the device, an autonomous driving unit that performs functions such as path maintenance, velocity control, destination setting, etc.

For example, the device may be an XR device such as an HMD, a head-up display (HUD) provided in a vehicle, a television, a smartphone, a computer, a wearable device, a home appliance, a digital signage, a vehicle, a robot, etc. In this case, the device may further include at least one of a sensor unit that senses state information, environmental information, user information of or around the device, a power supply unit that supplies power and includes a wired/wireless charging circuit, a battery, etc., an input/output unit that acquires control information, data, etc., from outside and outputs generated XR objects.

For example, the device may be a robot that may be classified into industrial, medical, household, military, etc., use depending on the purpose or field of use. In this case, the device may further include at least one of a driving unit that performs various physical operations such as moving robot joints, a sensor unit that senses state information, environmental information, user information of or around the device.

For example, the device may be an AI device such as a TV, a projector, a smartphone, a PC, a laptop, a digital broadcast terminal, a tablet PC, a wearable device, a set-top box (STB), a radio, a washing machine, a refrigerator, a digital signage, a robot, or a vehicle, or the like. In this case, the device may further include at least one of a training unit that trains a model configured with an artificial neural network by using training data, an input unit that acquires various types of data from outside, an output unit that generates outputs related to vision, hearing, touch, and the like, a sensor unit that senses state information, environmental information, or user information of or around the device.

The structure of the wireless device shown in FIG. 2 may be understood as a part of a RAN node (e.g., a base station, a DU, an RU, an RRH, etc.). That is, the device shown in FIG. 2 may be a RAN node. In this case, the device may further include a wired transceiver for front haul and/or back haul communication. However, if the front haul and/or back haul communication is based on wireless communication, at least one transceiver 206 shown in FIG. 2 may be used for the front haul and/or back haul communication, and a wired transceiver may not be included.

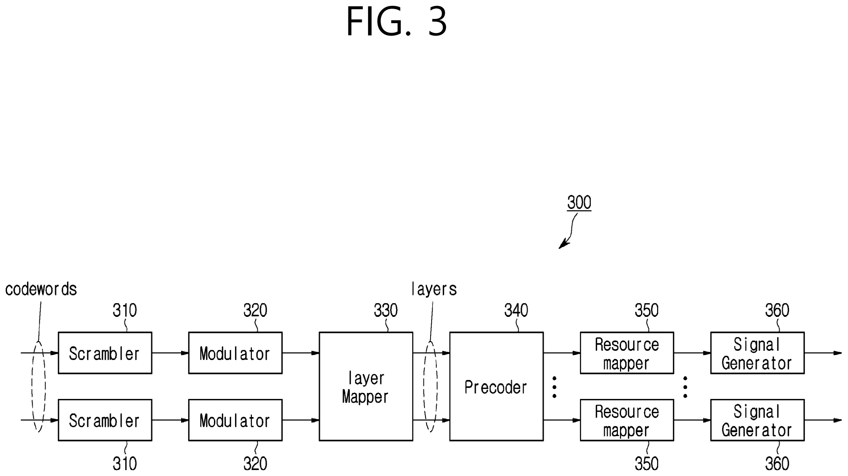

FIG. 3 shows a method of processing a transmitted signal applicable to the present disclosure. For example, the transmitted signal may be processed by a signal processing circuit. At this time, a signal processing circuit 300 may include a scrambler 310, a modulator 320, a layer mapper 330, a precoder 340, a resource mapper 350, a signal generator 360. At this time, for example, the operations/functions of FIG. 3 may be performed by the processor 202 and/or the transceiver 206 of FIG. 2. In addition, for example, the hardware element of FIG. 3 may be implemented in the processor 202 and/or the transceiver 206 of FIG. 2. For example, blocks 310 to 360 may be implemented in the processor 202 of FIG. 2. In addition, blocks 310 to 350 may be implemented in the processor 202 of FIG. 2, and block 360 may be implemented in the transceiver 206 of FIG. 2, without being limited to the above-described embodiments.

A codeword may be converted into a radio signal through the signal processing circuit 300 of FIG. 3. Here, the codeword is a coded bit sequence of an information block. The information block may include a transport block (e.g., a UL-SCH transport block, a DL-SCH transport block). The radio signal may be transmitted through various physical channels (e.g., a PUSCH, a PDSCH). Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to at least one transport layer by the layer mapper 330. Modulation symbols of each transport layer may be mapped to corresponding antenna port(s) by the precoder 340. The output z of the precoder 340 may be obtained by multiplying the output y of the layer mapper 330 by a precoding matrix W of NXM. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol, a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module and a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200 of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

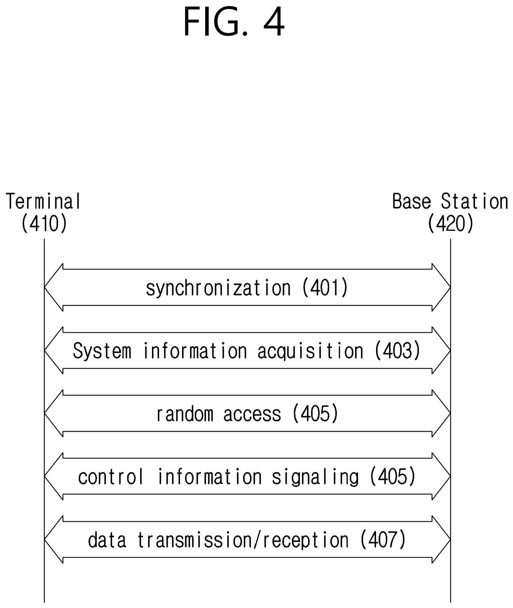

FIG. 4 shows a communication procedure between a terminal and a base station applicable to the present disclosure. FIG. 4 shows operations in which a terminal 410 and a base station 420 transmit and/or receive data, and operations performed prior thereto.

Referring to FIG. 4, in step 401, a terminal 410 and a base station 420 perform synchronization. For example, the terminal 410 performs an initial cell search operation. Specifically, the terminal 410 may detect at least one synchronization signal transmitted from the base station 420 based on a predefined rule. Here, the synchronization signal may include a plurality of synchronization signals classified based on structure or usage (e.g., a primary synchronization signal, a secondary synchronization signal). Through this, the terminal 410 may identify boundaries of a frame, a subframe, a slot, and/or a symbol of the base station 420, and may acquire information about the base station 420 (e.g., a cell identifier).

In step 403, the terminal 410 acquires system information transmitted from the base station 420. The system information is information related to attributes, characteristics, and/or capabilities of the base station 420 necessary to access the base station 420 and use a service, and may be classified based on content (e.g., whether it is essential for access), transmission structure (e.g., which channel is used, whether it is provided on-demand). For example, the system information may be classified into a master information block (MIB) and a system information block (SIB). If necessary, the terminal 410 may transmit a signal requesting the system information before receiving the system information. However, the requesting and providing of the system information may be performed after random access procedure described later.

In step 405, the terminal 410 and the base station 420 perform random access procedure. The terminal 410 may transmit and/or receive at least one message (e.g., random access preamble, random access response (RAR) message, etc.) for random access procedure based on information related to random access channel of the base station 420 (e.g., channel location, channel structure, structure of supported preambles, etc.) acquired through system information. For example, the terminal 410 may transmit a preamble (e.g., MSG1) through random access channel, receive an RAR message (e.g., MSG2), transmit to the base station 420 a message (e.g., MSG3) including information related to the terminal 410 (e.g., identification information) by using scheduling information included in the RAR message, and receive a message (e.g., MSG4) for contention resolution and/or connection establishment. In another example, MSG1 and MSG3 may be transmitted and received as a single message, or MSG2 and MSG4 may be transmitted and received as a single message.

In step 407, the terminal 410 and the base station 420 perform signaling of control information. Here, the control information may be defined in various layers such as a layer controlling connections (e.g., a radio resource control (RRC) layer), a layer handling mapping between logical channels and transport channels (e.g., a media access control (MAC) layer), a layer that handles physical channels (e.g., a physical (PHY) layer). For example, the terminal 410 and the base station 420 may perform at least one of signaling for establishing a connection, signaling for determining settings related to communication, signaling for indicating allocated resources.

In step 409, the terminal 410 and the base station 420 transmit and/or receive data. In other words, the terminal 410 and the base station 420 process and transmit and/or receive data based on signaling of control information. For example, when transmitting data, the terminal 410 or the base station 420 may perform at least one of channel encoding, rate matching, scrambling, constellation mapping, layer mapping, waveform modulation, antenna mapping, resource mapping on information bits. Conversely, when receiving data, the terminal 410 or the base station 420 may perform at least one of signal extraction from resources, waveform demodulation per antenna, signal placement considering layer mapping, constellation demapping, descrambling, channel decoding.

## 6G Communication System and core enabling technologies of the 6G system

A 5G system defines various operating bands within frequency range 1 (FR1) including 410 MHz to 7125 MHz and frequency range 2 (FR2) including 24,250 MHz to 71,000 MHz. For subsequent 6G system operating bands, various frequencies are being discussed, and the use of higher frequencies than those of the 5G system is being considered for wider bandwidth and higher transmission rates. As one example, the use of the Terahertz (THz) frequency band including approximately 100 GHz to 10 THz is being discussed. The THz frequency band has both the permeability of radio waves and the straightness of light waves, and communication using the THz frequency band is also expected to serve as a transitional role from communication centered on radio waves to communication based on light waves.

In this way, a 6G system utilizing the THz frequency has purposes such as i) very high data rate per device, ii) a very large number of connected devices, iii) global connectivity, iv) very low latency, v) decrease in energy consumption of battery-free IoT devices, vi) ultra-reliable connectivity, vii) connected intelligence with machine learning capacity, etc. The vision of the 6G system may include four aspects such as "intelligent connectivity", "deep connectivity", "holographic connectivity", "ubiquitous connectivity", and the 6G system may be designed to satisfy the requirements shown in [Table 1] below.

[Table 1]

| Per device peak data rate | 1 Tbps |
|---|---|
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

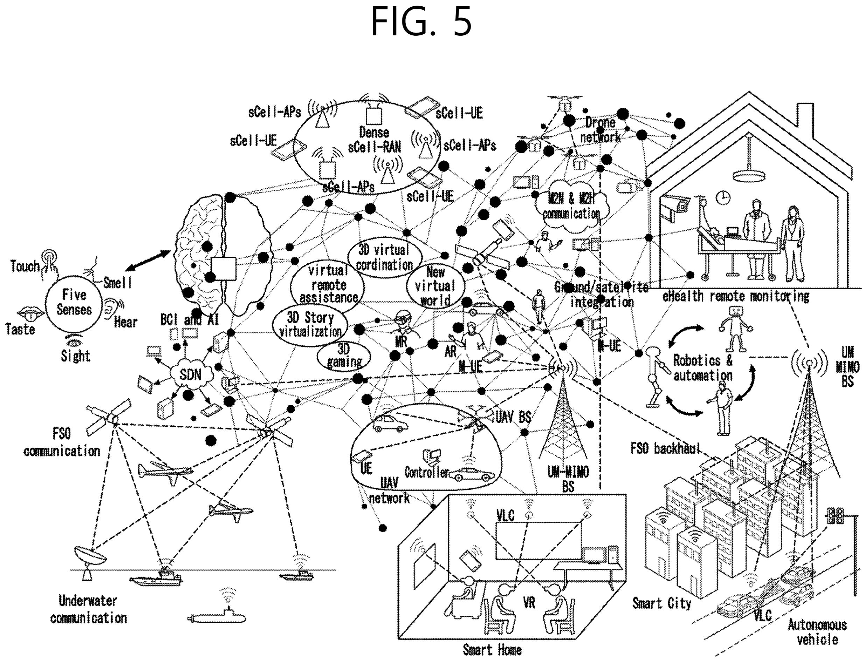

FIG. 5 shows an example of a communication structure providable in a 6G system applicable to the present disclosure. Referring to FIG. 5, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

As core enabling technologies of the 6G system, technologies such as artificial intelligence (AI), Terahertz (THz) communication, optical wireless technology, FSO backhaul networks, large-scale MIMO technology, blockchain, 3D networking, quantum communication, unmanned aerial vehicles, cell-free communication, wireless information and energy transfer (WIET), integration of sensing and communication, integration of access and backhaul networks, holographic beamforming, big data analytics, large intelligent surfaces (LIS), etc. may be adopted.

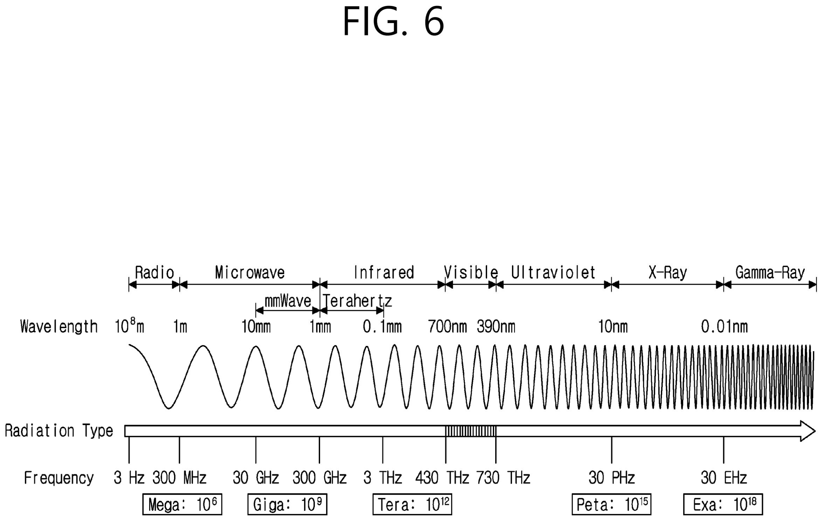

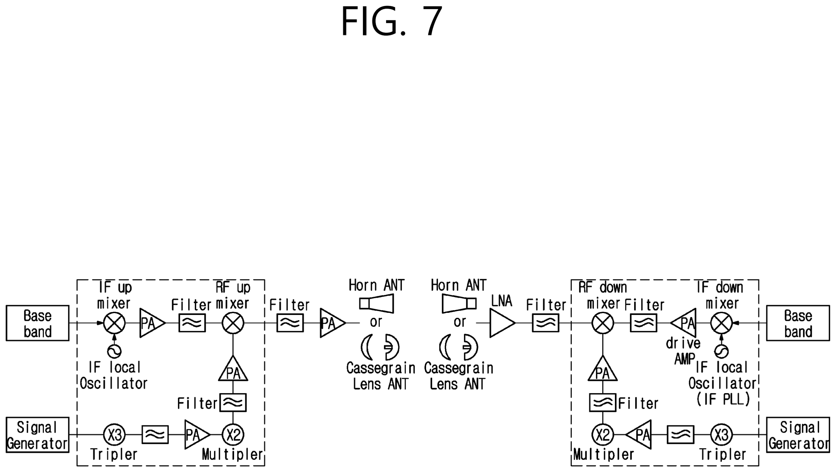

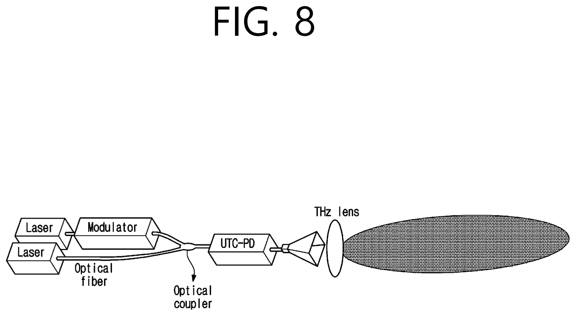

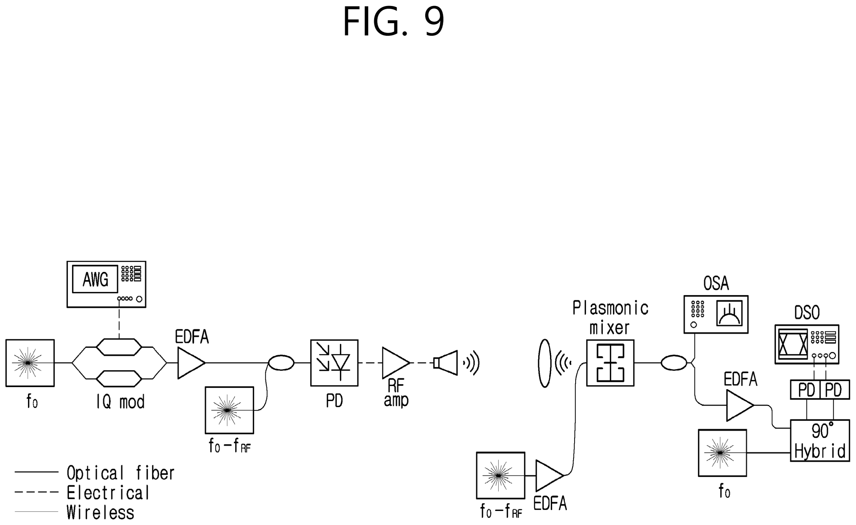

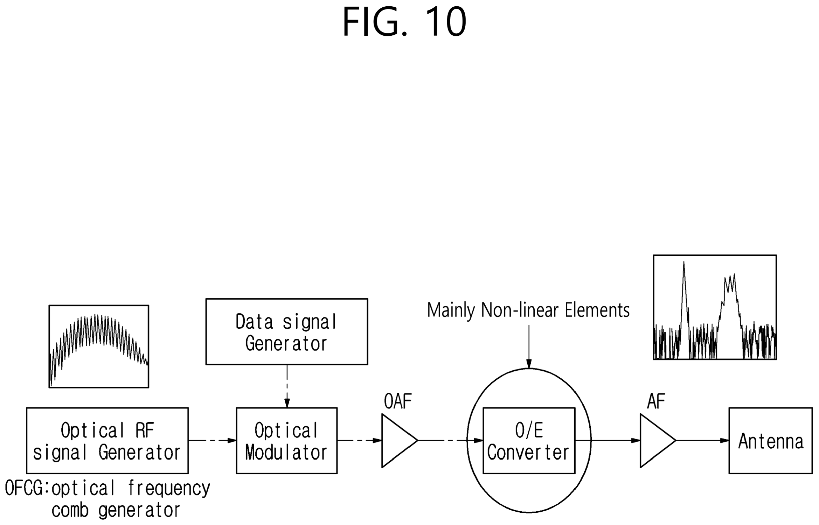

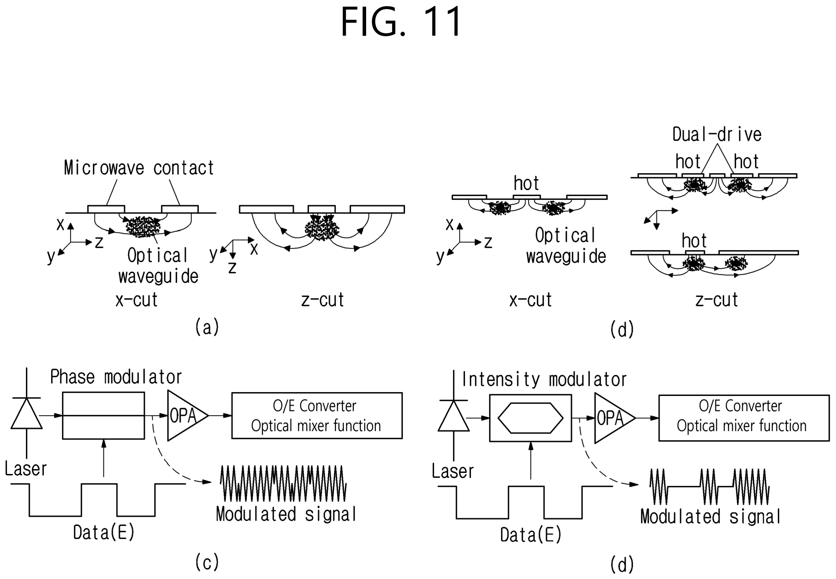

For example, THz communication is a communication that utilizes a spectrum in a frequency band between 0.1 THz and 10 THz with a corresponding wavelength in the range of 0.03 mm to 3 mm as shown in FIG. 6, and may be implemented using circuit elements having a structure as shown in FIG. 7. In addition, optical wireless technology is a technology that generates and modulates THz signals using optical elements, and may be implemented based on devices having structures as shown in FIGs. 8, 9, 10, 11.

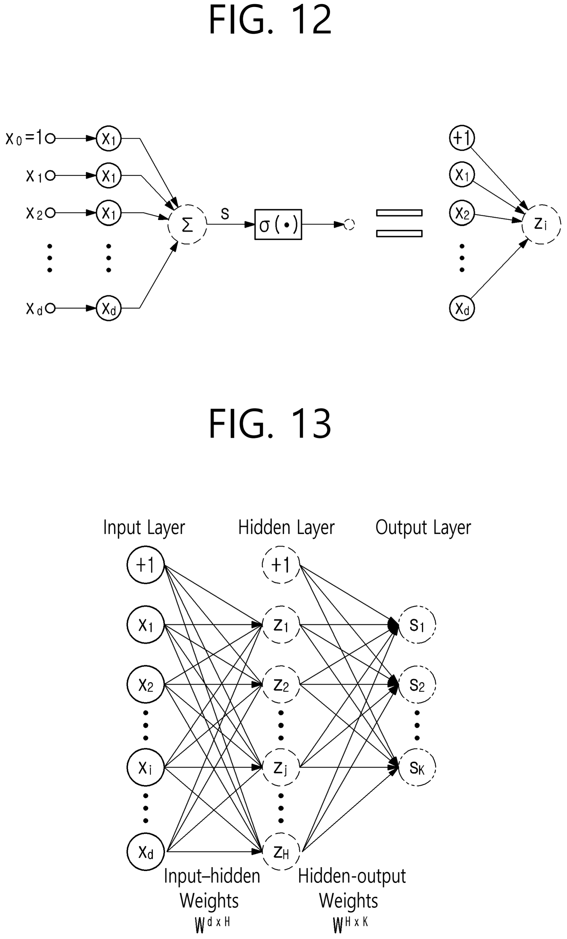

In addition, AI may be implemented based on various models such as neural networks, machine learning (machine models), etc. For example, an AI model of a neural network structure may be based on the structure of a perceptron as shown in FIG. 12. Referring to FIG. 12, an artificial neural network may be composed of a plurality of perceptrons. Based on the structure of the perceptron, if an input vector $x=\{x1, x2, ..., xd\}$ is input, each component is multiplied by a weight $\{W1, W2, ..., Wd\}$, and after the results are all summed up, an activation function $\sigma(\cdot)$ is applied. In the case of a large-scale artificial neural network structure, If the simplified perceptron structure shown in FIG. 12 is extended, input vectors may be applied to perceptron of different dimensions. If perceptrons are stacked, a neural network with an input layer, hidden layer, output layer, as shown in FIG. 13, may be constructed.

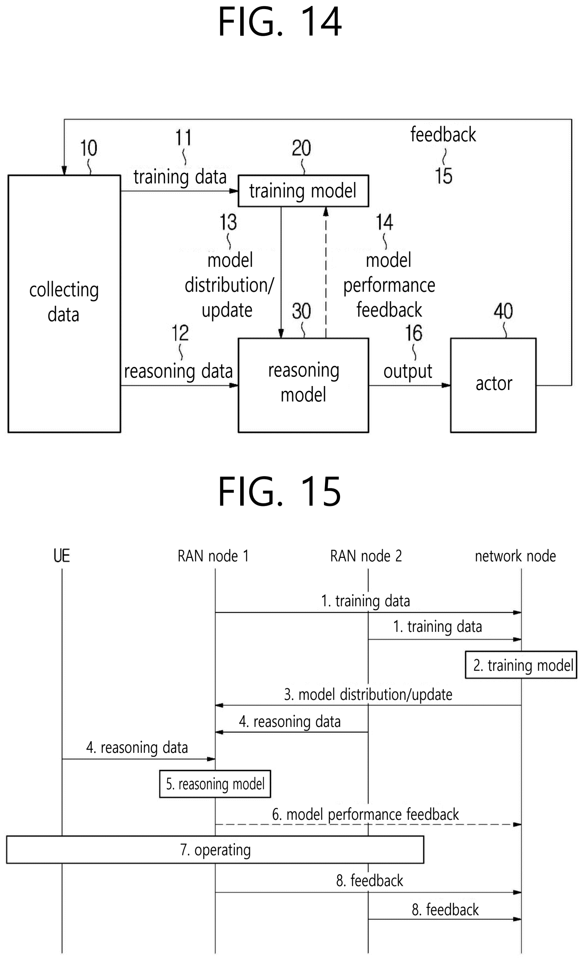

AI technology utilizing the structure of the neural network as described above may be operated based on a functional framework as shown in FIG. 14 below. FIG. 14 shows an example of a functional framework for application of AI technology applicable to the present disclosure. First, a data collection block 1410 generates training data 1411 and/or reasoning data 1411 including processed input data by performing data preparation on input data collected from objects (e.g., UE, RAN node, network node, etc.). A model training block 1420 performs training on an AI model using the training data 1411, and provides information on the trained model to a model reasoning block 1430. The model reasoning block 1430 generates an output 1416 by performing reasoning and/or prediction using the reasoning data 1411. Also, the model reasoning block 1430 may provide model performance feedback 1414 to the model training block 1420. Here, the output 1416 means a reasoning output of the AI model generated by the model reasoning block 1430, and detailed information of the reasoning output may vary based on a use case. An actor block 1440 triggers or performs a designated task/operation based on the output 1416. The actor block 1440 may trigger a task/operation for another object (e.g., at least one UE, at least one RAN node, at least one network node, etc.) or for itself. Any one of the functions exemplified in the aforementioned FIG. 14 may be performed by two or more objects among a RAN, a network node, an OAM of a network operator, or a UE in collaboration. This may be referred to as a split AI operation.

FIG. 15 shows an example of a procedure for utilizing an AI model applicable to the present disclosure. FIG. 15 exemplifies a case where a model training function (e.g., the function of the model training block 1420) is included in a network node, and a model reasoning function (e.g., the function of the model reasoning block 1430) is included in a RAN node. Referring to FIG. 15, in step 1, a RAN node 1 and a RAN node 2 transmit input data (e.g., training data) for training on the AI model to the network node. Here, the RAN node 1 and the RAN node 2 may transmit data collected from a UE (e.g., velocity, location of the UE, measurement of the UE related to RSRP, RSRQ, SINR of a serving cell and a neighbor cell, etc.,) together to the network node. In step 2, the network node trains the AI model using the received training data. In step 3, the network node distributes/updates the AI model to the RAN node 1 and/or the RAN node 2. The RAN node 1 and/or the RAN node 2 may continue to perform model training based on the received AI model. In this procedure, it is assumed that the AI model is distributed/updated only to the RAN node 1. In step 4, the RAN node 1 receives input data (e.g., reasoning data) for AI model reasoning from the UE and the RAN node 2. In step 5, the RAN node 1 generates output data (e.g., prediction or determination) by performing reasoning based on AI model using the received reasoning data. In step 6, if applicable, the RAN node 1 may transmit model performance feedback to the network node. In step 7, the RAN node 1, the RAN node 2, and the UE (or 'the RAN node 1 and the UE', or 'the RAN node 1 and the RAN node 2') perform an operation based on the output data. For example, in the case of a load balancing operation, the UE may move from the RAN node 1 to the RAN node 2. In step 8, the RAN node 1 and the RAN node 2 transmit feedback information to the network node.

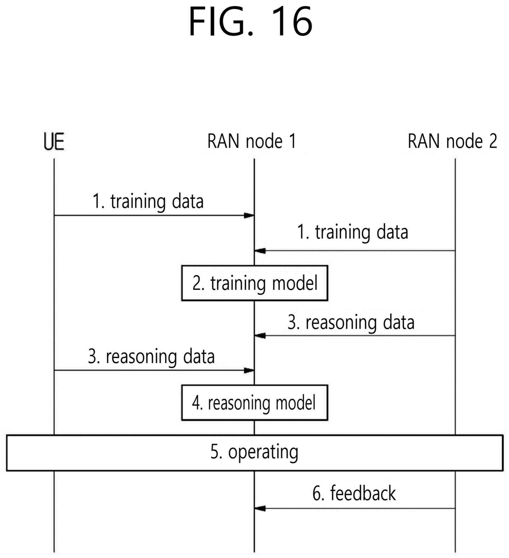

FIG. 16 shows another example of a procedure for utilizing an AI model applicable to the present disclosure. FIG. 16 exemplifies a case where a model training function (e.g., the function of the model training block 1420) and a model reasoning function (e.g., the function of the model reasoning block 1430) are included in a RAN node. Referring to FIG. 16, in step 1, a UE and a RAN node 2 transmit input data (e.g., training data) for training on the AI model to a RAN node 1. In step 2, the RAN node 1 trains the AI model using the received training data. In step 3, the RAN node 1 receives input data (e.g., reasoning data) for reasoning based on the AI model from the UE and the RAN node 2. In step 4, the RAN node 1 generates output data (e.g., prediction or determination) by performing reasoning based on the AI model using the received reasoning data. In step 5, the RAN node 1, the RAN node 2, and the UE (or 'the RAN node 1 and the UE', or 'the RAN node 1 and the RAN node 2') perform an operation based on the output data. For example, in the case of a load balancing operation, the UE may move from the RAN node 1 to the RAN node 2. In step 6, the RAN node 2 transmits feedback information to the RAN node 1.

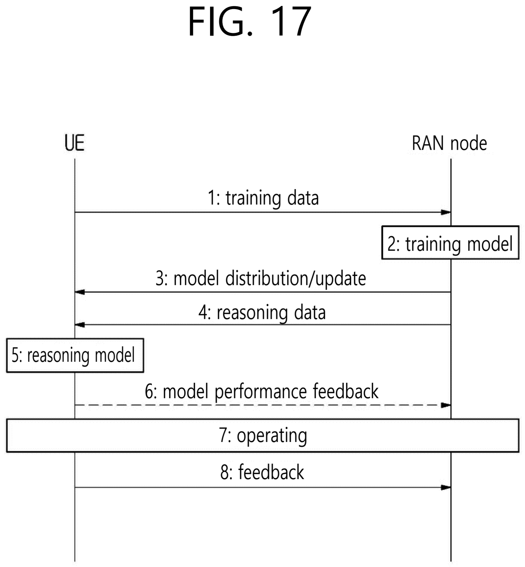

FIG. 17 shows another example of a procedure for utilizing an AI model applicable to the present disclosure. FIG. 17 exemplifies a case where a model training function (e.g., the function of the model training block 1420) is included in a RAN node, and a model reasoning function (e.g., the function of the model reasoning block 1430) is included in a UE. Referring to FIG. 17, in step 1, the UE transmits input data (e.g., training data) for training on the AI model to the RAN node. Here, the RAN node may collect data from various UEs and/or from other RAN nodes. In step 2, the RAN node trains the AI model using the received training data. In step 3, the RAN node distributes/updates the AI model to the UE. The UE may continue to perform model training based on the received AI model. In step 4, input data (e.g., reasoning data) for reasoning based on the AI model is received from UE and the RAN node and/or from other UEs. In step 5, the UE generates output data (e.g., prediction or determination) by performing reasoning based on AI model using the received reasoning data. In step 6, if applicable, the UE may transmit model performance feedback to the RAN node. In step 7, the UE and the RAN node perform an operation based on the output data. In step 8, the UE transmits feedback information to the RAN node.

Based on the aforementioned framework and procedures, in a wireless communication system, an AI model may be trained and utilized. In the aforementioned framework and procedures, various data, such as input data, training data, and reasoning data, etc., are introduced. The specific content of the aforementioned data may vary based on the task for which the AI model is utilized. For example, information used in various embodiments of the present disclosure described below may be included in the aforementioned data.

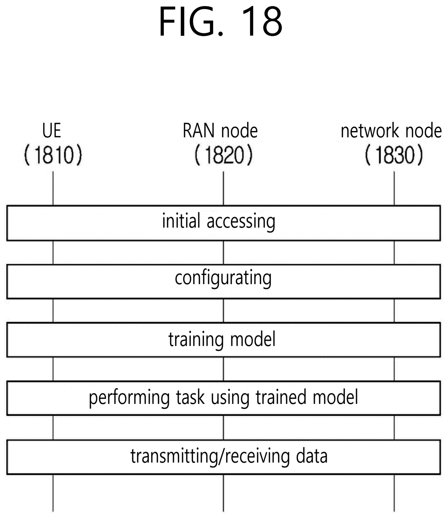

FIG. 18 shows communication procedure based on an AI technology applicable to the present disclosure. The detailed procedures shown in FIG. 18 may be combined with various embodiments of the present disclosure described below. For example, data generated based on various embodiments of the present disclosure may be used for operations (e.g., configuration, training, reasoning and/or data transmission/reception) in at least one of the detailed procedures shown in FIG. 18. As another example, the results of the reasoning shown in FIG. 18 may be used to transmit and/or receive data based on various embodiments of the present disclosure.

Referring to FIG. 18, in step 1801, at least one of a UE 1810, a RAN node 1820, and a network node 1830 performs an initial access procedure. For example, in this step, at least one of an initial cell search operation, a system information acquisition operation, a random access operation, and a registration operation may be performed. In step 1803, at least one of the UE 1810, the RAN node 1820, and the network node 1830 performs a configuration procedure. Through the configuration procedure, parameters, resources, connections, and/or entities necessary for performing subsequent procedures in layers between the UE 1810 and the RAN node 1820 and/or in at least one layer between the UE 1810 and the network node 1830 may be determined and/or generated. In this case, the configuration procedure may be performed based on information, status, and/or characteristics of an AI model used for subsequent training and reasoning.

In step 1805, at least one of the UE 1810, the RAN node 1820, and the network node 1830 performs a model training procedure. At least one of the UE 1810, the RAN node 1820, and the network node 1830 may collect training data and perform learning using the training data. For example, the model training procedure may be performed as described with reference to FIG. 15, FIG. 16, or FIG. 17. If an offline trained model is used, this step may be omitted.

In step 1807, at least one of the UE 1810, the RAN node 1820, and the network node 1830 performs a task using the trained model. That is, the task may be performed based on the results of reasoning and/or prediction using the trained model. For example, the task may be a procedure belonging to a communication protocol, and may be a preparatory operation for subsequent data transmission and/or reception, or may be related to data transmission and/or reception, or may be related to data processing (e.g., encoding, decoding, etc.).

In step 1809, at least one of the UE 1810, the RAN node 1820, and the network node 1830 transmits and/or receives data. At this time, the result of the task performed at step 1807 may be used. In some cases, the task performed at step 1807 may include transmitting and/or receiving data, in which case this step may be omitted as it is part of step 1807.

Specific Embodiment of the present disclosure

The present disclosure relates to a technology for variably transmitting and receiving semantic representation in a wireless communication system that supports semantic communication. Specifically, the present disclosure relates to a technology in which a transmitting device variably transmits a semantic representation in consideration of a task to be performed at a receiving device in an environment supporting unified multi-tasking.

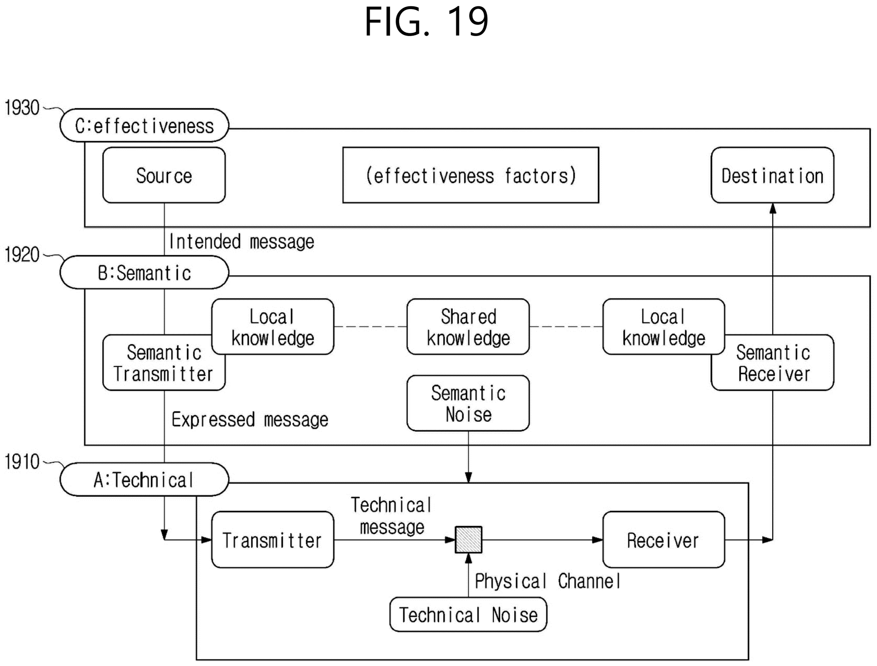

Problems related to communication may be divided into three levels, as shown in FIG. 19, based on the philosophy of Shannon and Weaver. FIG. 19 shows a communication model applicable to the present disclosure. A problem of Level A 1910 is a technical problem related to how accurately symbols in communication may be transmitted, and a problem of Level B 1920 is a semantic problem related to how accurately transmitted symbols convey a desired meaning. A problem of Level C 1930 is an effectiveness problem related to how effectively a received meaning influences an operation in a desired manner.

Information theory of Shannon focuses only on technical problems at Level A 1910 and does not consider communication from a semantic perspective. However, Weaver explains that information theory of Shannon is sufficiently general to consider problems at Level B 1920 and Level C 1930 by adding semantic transmitters, semantic receivers, and semantic noise, etc., to communication model of Shannon.

Meanwhile, one of the various goals of 6G communication is to enable various new services that interconnect people and machines. Therefore, a semantic communication method that considers the semantic problems of Level B 1920 rather than simply considering the technical problems of Level A 1910 in communication systems needs to be provided. Semantic communication refers to the efficient transmission and reception of semantic information by utilizing common background knowledge between a first device and a second device, respectively corresponding to the source and destination. Referring to the communication model of FIG. 19, if the meaning of the intended message sent by the first device, which corresponds to the source, is accurately interpreted by the second device, which corresponds to the destination, it may be said that correct semantic communication has been performed.

For semantic communication, a source may generate a semantic representation based on given or collected raw data and transmit the generated semantic representation to a destination. The destination interprets and reasons the received semantic representation based on the source's intent. At this time, semantic communication requires an approach not from the perspective of reducing reconstruction errors that occur in the process of restoring the semantic representation received at the destination to the original data (raw data), but from the perspective of whether the downstream task, which is the task performed at the destination, operates based on the source's intent using the received semantic representation. Therefore, the destination utilizes its own background knowledge when performing reasoning operations, and it is desirable for the background knowledge included in the data transmitted from the source to be reflected in the background knowledge of the destination to ensure correct interpretation results. In other words, since the destination uses background knowledge to interpret and reason semantic representations, the source and destination need to share the same background knowledge.

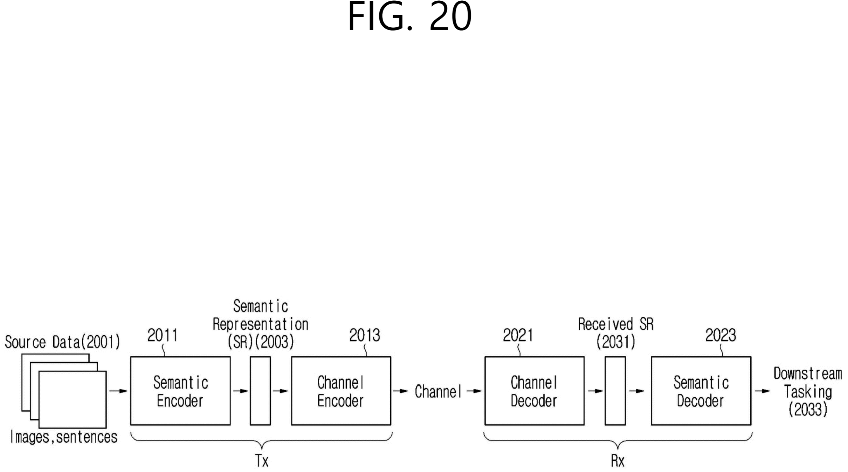

For semantic communication, a source may generate a semantic representation including semantic information about the data to be transmitted and transmit the generated semantic representation to a destination. It is crucial for the destination to interpret the semantic information included in the received semantic representation in accordance with the source's intent. A general framework for this semantic communication may be represented as shown in FIG. 20.

FIG. 20 shows an example of a semantic communication framework applicable to the present disclosure. Referring to FIG. 20, a transmitting device corresponding to a source encodes source data 2001 to be transmitted using a semantic encoder 2011, thereby generating a semantic representation (SR) 2003 including semantic information of the source data 2001. The transmitting device encodes the semantic representation 2003 using a channel encoder 2013, and then transmits a signal including the encoded semantic representation 2003 to a receiving device corresponding to a destination through a wireless channel. The receiving device obtains the semantic representation 2031 by decoding the signal received through the wireless channel using a channel decoder 2021. The receiving device uses a semantic decoder 2023 to restore data corresponding to the semantic representation 2031, and performs a downstream task, which is the task to be ultimately solved, based on the restored data.

For the aforementioned semantic communication framework, the transmitting device must know in advance information about a task to be performed at the receiving device, for example, a type of the task. Recently, based on deep neural network (DNN) with the advancement of deep learning technology, multi-task-oriented semantic communication technologies have been proposed to generalize to perform various tasks by using the semantic representation at the receiving device.

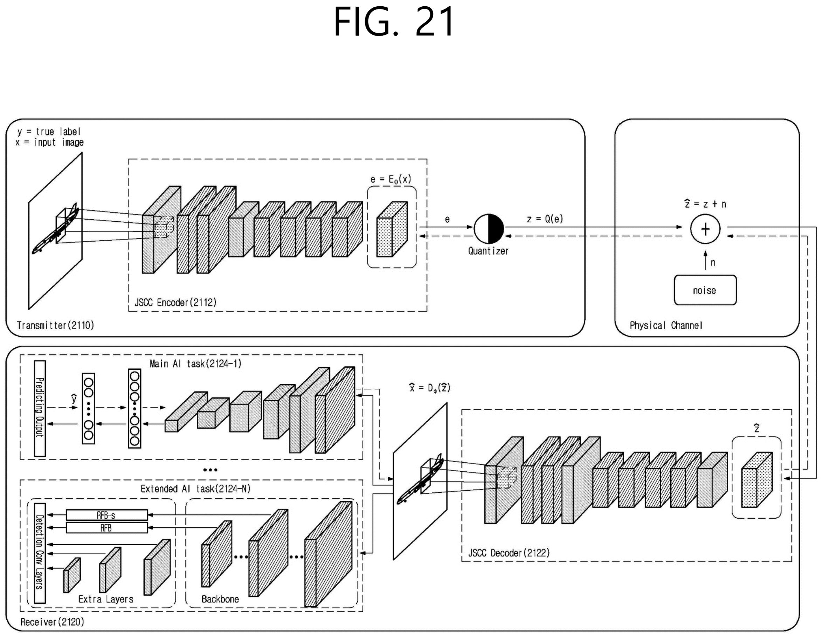

FIG. 21 shows an example of a multi-task-oriented semantic communication method applicable to the present disclosure. Referring to FIG. 21, a transmitting device 2110 corresponding to a source generates a semantic representation e of an input image x, which is data to be transmitted, using a joint source-channel code (JSCC) encoder 2112, quantizes the generated semantic representation, and then transmits it to a receiving device 2120 corresponding to a destination. The receiving device 2120 restores the original data corresponding to the semantic representation using a JSCC decoder 2122, and performs at least one task among a plurality of tasks 2124-1 to 2124-N using the restored data $\hat{x}$. That is, based on the multi-task-oriented semantic communication technology, the receiving device 2120 must be able to perform a plurality of tasks based on the restored data, after restoring data corresponding to the semantic representation. To this end, the transmitting device has the problem of having to generate a semantic representation including a large amount of semantic information.

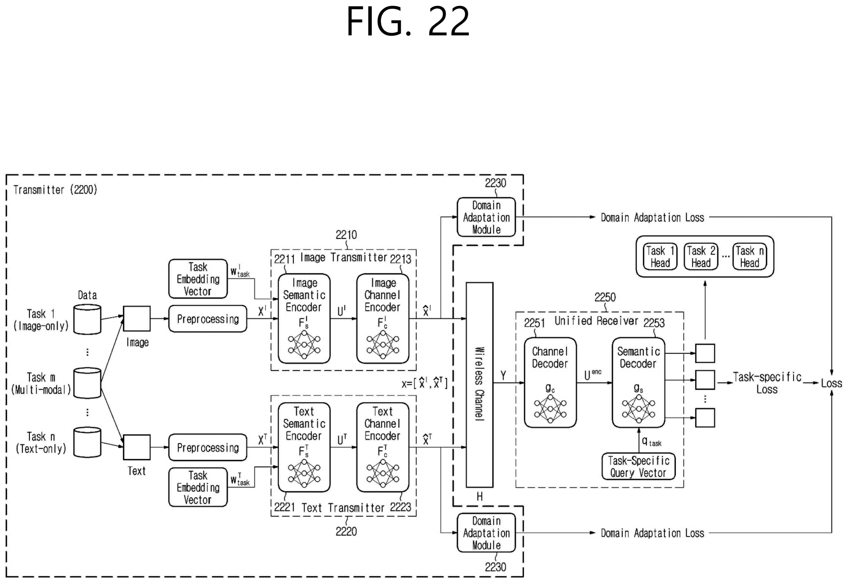

In order to generate a semantic representation including a large amount of semantic information, as shown in FIG. 22, an unified multi-task semantic communication method capable of processing both image data and text data has been proposed. FIG. 22 shows an example of an unified multi-task semantic communication method using domain adaptation applicable to the present disclosure. Referring to FIG. 22, a transmitting device 2200 includes an image transmitter 2210 and a text transmitter 2220. The image transmitter 2210 may transmit image data among data related to a plurality of tasks (Task 1, Task m, Task n), and the text transmitter 2220 may transmit text data among data related to a plurality of tasks. That is, the image transmitter 2210 receives image data $X^I$ and a task embedding vector $W_{task}^I$, and obtains a semantic representation $U^I$ for the image data $X^I$ using an image semantic encoder 2211. The image transmitter 2210 obtains a channel encoding result $\hat{X}^I$ for the semantic representation $U^I$ through an image channel encoder 2213, and then transmits the obtained channel encoding result $\hat{X}^I$ to a unified receiver 2250 through a wireless channel. Also, a text transmitter 2220 receives text data $X^T$ and a task embedding vector $W_{task}^I$, and obtains a semantic representation $U^T$ for the text data $X^T$ using a text semantic encoder 2221. The text transmitter 2220 obtains a channel encoding result $\hat{X}^T$ for the semantic representation $U^T$ through a text channel encoder 2223, and then transmits the obtained channel encoding result $\hat{X}^T$ to the unified receiver 2250 through a wireless channel.

A unified receiver 2250 receives a signal Y through a wireless channel, decodes the received signal Y through a channel decoder 2251, and thereby obtains a semantic representation. The unified receiver 2250 performs at least one task among a plurality of tasks (e.g., Task1, Task2, ..., TaskN) based on the semantic representation using a semantic decoder 2253. At this time, the semantic decoder 2253 may perform at least one task determined by a task-specific query vector among the plurality of tasks.

In the unified multi-task semantic communication method described above, the unified receiver 2250 may perform all of the plurality of tasks based on the semantic representation, or may perform some of the plurality of tasks based on the semantic representation. Accordingly, the transmitting device 2200 of the unified multi-task semantic communication method may adaptively adjust the size of the transmitted semantic representation using the domain adaptation module 2230.

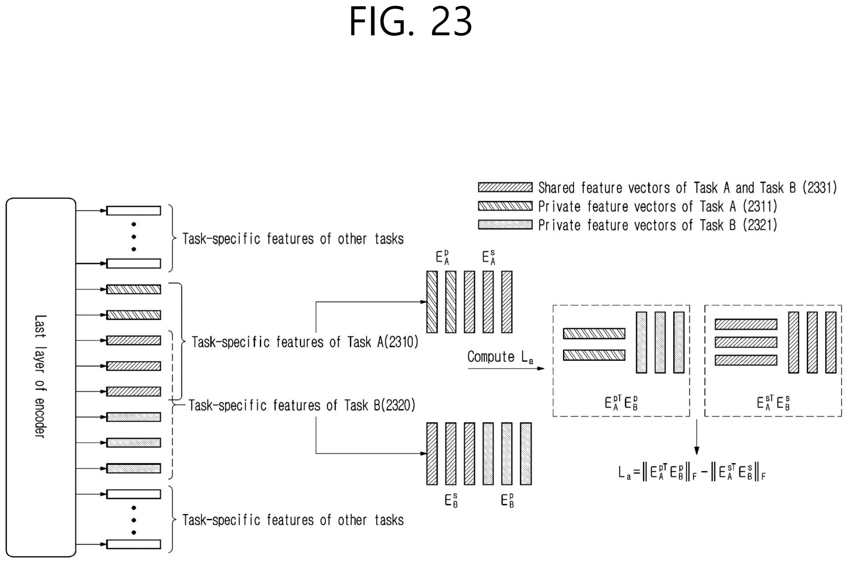

FIG. 23 shows an example of a domain adaptation module applicable to the present disclosure. Referring to FIG. 23, a semantic representation output through the last layer 2300 of an encoder (e.g., a semantic encoder 2211, 2221 of FIG. 22) is composed of a plurality of semantic representation elements (SR elements). Here, each of the plurality of SR elements may be a task-specific feature or a task-specific SR related to at least one task. For example, at least some of the plurality of SR elements may be task-specific SRs of Task A related to Task A, and other some of the plurality of SR elements may be task-specific SRs of Task B related to Task B. In addition, other some of the plurality of SR elements may be task-specific SRs of Task A and Task B related to Task A and Task B. Here, if a specific SR element is related to only one task, the SR element may be referred to as a private SR of the task. Furthermore, if a specific SR element is related to a plurality of tasks, the SR element may be referred to as a shared SR of the plurality of tasks.

The domain adaptation module 2230 selects at least one task-specific SR from among a plurality of SR elements based on a task to be performed at a receiving device corresponding to a destination, and transmits the selected at least one task-specific SR. For example, if the receiving device wants to perform task A, the domain adaptation module 2230 may transmit only task-specific SRs 2310 related to task A to the receiving device. As another example, if the receiving device wants to perform tasks A and B simultaneously, the domain adaptation module 2230 may transmit task-specific SRs 2310 related to task A and task-specific SRs 2320 related to task B to the receiving device. At this time, the task-specific SRs 2310 related to task A may include a private SR 2311 of task A and a shared SR 2331 of tasks A and task B. Additionally, the task-specific SRs 2320 related to task B may include a private SR 2321 of task B and a shared SR 2331 of tasks A and B. Accordingly, the receiving device may receive at least one task-specific SR related to a task to be performed by the receiving device, and may perform only the desired task based on the received at least one task-specific SR.

As described above, in the unified multi-task semantic communication method using domain adaptation, the source may adaptively control the size of the SR to be transmitted based on the task to be performed at the destination, thereby improving the efficiency of SR transmission and reception. However, in order to perform domain adaptation in the unified multi-task semantic communication method described above, an index of a task-specific SR related to each of plurality of tasks must be defined, but to date, no method for determining the index of a task-specific SR has been proposed. Furthermore, while the domain adaptation module may be trained based on the loss function $L_a$, in this case, accurate result analysis has not been performed to determine whether the downstream task operates normally at the destination. However, in order to perform domain adaptation in the unified multi-task semantic communication method described above, the index of the task-specific SR must be defined. Furthermore, when the domain adaptation method is actually applied, an analysis to determine whether the downstream task operates normally is also essential.

Therefore, the present disclosure proposes a technique for assigning an index of SR to plurality of tasks and a technique for training a semantic encoder and a semantic decoder for SR adaptation. The embodiments described below can improve the efficiency of semantic communication using actual SR adaptation.

Determining task difficulty for SR index allocation

Based on an embodiment of the present disclosure, the indexes of task-specific SRs for a plurality of tasks may be assigned based on the difficulty level of each task performed at the destination, i.e., the difficulty of the task. For example, a large number of indexes may be assigned to a task with a relatively high difficulty among the plurality of tasks, and a small number of indexes may be assigned to a task with a relatively low difficulty. In this way, since the indexes of task-specific SRs to be assigned to each task are determined based on the difficulty of the task, determining the difficulty of the task is very important. In the present disclosure, the difficulty is a metric that affects the distribution of the index, and thus may be referred to as an index share, an index distribution metric, an output resolution, or other terms having an equivalent technical meaning.

Based on an embodiment, the task difficulty may be determined based on state-of-the-art (SOTA) accuracy. For example, the task difficulty may be configured based on the accuracy using the SOTA technology presented to date for each task, regardless of the structure of the semantic encoder and/or semantic decoder used in semantic communication. Specifically, the task difficulty may be configured lower as the SOTA accuracy of the task increases, and may be configured higher as the SOTA accuracy of the task decreases.

[Table 2] shows an example of difficulty configuration based on the SOTA accuracy of classification and logical entailment tasks.

[Table 2]

| Task | SOTA Accuracy (%) | Difficulty |
|---|---|---|
| Classification (ImageNet) | 91.1 | 0.89 |
| Classification (CIFAR-100) | 96.6 | 0.34 |
| Entailment (SNLI) | 93.1 | 0.69 |

Referring to [Table 2], the SOTA accuracy for the classification task of IFAR-100 data is the highest at 96.6%, and the SOTA accuracy for the classification task of ImageNet data is the lowest at 91.1%. In addition, the SOTA accuracy for the logical entailment task of SNLI data is the intermediate value at 93.1%. Therefore, the difficulty for the classification task of IFAR-100 data may be configured to have the lowest value, and the difficulty for the classification task of ImageNet data may be configured to have the highest value. That is, if the difficulty of the classification task of ImageNet data is defined as $D_{class}$(ImageNet), the difficulty of the classification task of CIFAR-100 data is defined as $D_{class}$(CIFAR-100), and the difficulty of the logical entailment task of SNLI data is defined as $D_{entail}$(SNLI), then the difficulty of each task may be configured to satisfy $D_{class}(ImageNet) \geq D_{entail}(SNLI) \geq D_{class}(CIFAR-100)$. The task difficulty in [Table 2] is configured based on (1-SOTA accuracy)/10. This is merely an example to help understanding, and the embodiments of the present disclosure are not limited thereto.

Based on an embodiment, the difficulty of a task may be determined based on the structure of a semantic encoder and/or semantic decoder used in semantic communication. For example, if a semantic encoder and a semantic decoder are configured, the accuracy of a task performed by the configured semantic encoder and semantic decoder can be measured, and thus the difficulty of the task may be configured based on this. The difficulty of the task may be configured lower as the measured accuracy of the task increases, and may be configured higher as the measured accuracy of the task decreases. For example, the difficulty of a task based on the structure of the semantic encoder and/or semantic decoder may be determined in a manner similar to the method of determining the difficulty based on the SOTA accuracy.

Based on an embodiment, the difficulty of a task may be pre-configured by the user, regardless of the accuracy of the task. For example, the task difficulty may be configured by an expert as shown in [Table 3]. [Table 3] shows examples of difficulty configuration for classification and reconstruction tasks.

[Table 3]

| Task | Difficulty |
|---|---|
| Classification(Image) | 0.3 |
| Reconstruction(Image) | 0.7 |

[Table 3] shows a case where the difficulty of the image classification task is configured to 0.7 and the difficulty of the image restoration task is configured to 0.3. Here, the difficulty values of the tasks are merely examples to help understanding, and the embodiments of the present disclosure are not limited thereto. For example, if the image classification task is a task that performs a simpler or easier task than the image reconstruction task, the difficulty $D_{reconstruct}(image)$ of the image classification task and the difficulty $D_{class}(image)$ of the image reconstruction task may be configured to different values that satisfy $D_{reconstruct}(image) \geq D_{class}(image)$.

Various embodiments for determining the difficulty of tasks have been described above. However, the proposed technique is not limited by the method of determining the difficulty, but is performed based on the determined difficulties. Therefore, difficulties determined using methods other than the aforementioned embodiments may be applied.

Index Assignment for Task-Specific Semantic Representation

Based on embodiments of the present disclosure, the indexes of task-specific SRs for a plurality of tasks may be assigned based on the difficulty of each task determined as described above. Based on the difficulty of each task, the indexes of task-specific SRs for the plurality of tasks may be configured as follows.

First, the number of task-specific SR indexes for a specific task may be defined as follows [Equation 1].

[Equation 1]

$$n(i) = \frac{D_i}{\sum_{k=1}^{N} D_k} r$$

In [Equation 1], n(i) represents the number of task-specific SR indexes for task i, and Di represents the difficulty of task i. Furthermore, N represents the number of tasks, and r represents a proportional constant satisfying $r \in R$. r may be a real number.

Next, the number of shared SR indexes across different tasks may be defined as in [Equation 2] and/or [Equation 3].

[Equation 2]

$$n(i,j) = \frac{\min(n(i), n(j))}{\alpha}$$

In [Equation 2], n(i,j) represents the number of task-specific SR indexes shared by task i and task j, n(i) represents the number of task-specific SR indexes for task i, and n(j) represents the number of task-specific SR indexes for task j. In addition, $\alpha$ represents a system parameter that satisfies $1 \leq \alpha \in R$. Here, n(i,j) is such that i=1, 2, ..., N and j=1, 2, ...N, and

when $i \neq j$, satisfies $0 \leq n(i,j,k) \leq min(n(i,j), n(j,k), n(i,k))$.

[Equation 3]

$$n(i,j,k) = \frac{\min\big(n(i,j), n(j,k), n(i,k)\big)}{\alpha^2} = \frac{\min\big(n(i), n(j), n(k)\big)}{\alpha^2}$$

In [Equation 3], n(i, j, k) represents the number of task-specific SR indexes shared by task i, task j, and task k, n(i,j) represents the number of task-specific SR indexes shared by task i and task j, n(j,k) represents the number of task-specific SR indexes shared by task j and task k, and n(i,k) represents the number of task-specific SR indexes shared by task i and task k. In addition, n(i) represents the number of task-specific SR indexes for task i, n(j) represents the number of task-specific SR indexes for task j, and n(k) represents the number of task-specific SR indexes for task k. In addition, $\alpha$ represents a system parameter that satisfies $1 \leq \alpha \in R$. Here, when n(i,j,k) is $i \neq j \neq k$, it satisfies $n(i,j,k) = min(n(i,j), n(j,k), n(i,k))$.

Based on the regularity shown in [Equation 2] and [Equation 3], the general term for $n(i_1, i_2, \cdots, i_K)$ may be defined as in [Equation 4].

[Equation 4]

$$n(i_1, i_2, \cdots, i_K) = \frac{\min\limits_{i \in \{i_1, i_2, \cdots, i_K\}} n(i)}{\alpha^{K-1}}$$

In [Equation 4], $n(i_1, i_2, ..., i_k)$ is the number of task-specific SR indexes shared by tasks $i_1$ to $i_k$, $\alpha$ represents a system parameter that satisfies $1 \leq \alpha \in R$. Here, $i_1, i_2, \cdots, i_K$ satisfies $i_1, i_2, \cdots, i_K \in \{1, 2, \cdots, N\}$.

To calculate the value r defined in [Equation 1], a union formula such as [Equation 5] may be used.

[Equation 5]

$$\left| \cup_{i=1}^{N} I_{T_i} \right| = \sum_{i=1}^{N} \left| I_{T_i} \right| - \sum_{i \neq j} \left| I_{T_i} \cap I_{T_j} \right| + \sum_{i \neq j \neq k} \left| I_{T_i} \cap I_{T_j} \cap I_{T_k} \right| + \cdots + (-1)^{N-1} \left| \bigcap_{i=1}^{N} I_{T_i} \right|$$

In [Equation 5], $I_{Ti}$ represents a set including SR indexes of task i, and $\left| \cup_{i=1}^{N} I_{T_i} \right|$ represents a union of sets including SR indexes of task i to sets including SR indexes up to task N. Here, if $n(i_1, i_2, \cdots, i_K)$ is defined as $n(i_1, i_2, \cdots, i_K) = |\cap_{i \in \{i1, i2, \cdots, iK\}} I_{Ti}|$, n(i) and n(i,j) may be defined as , $n(i) = |I_{Ti}|$, and $n(i,j) = |I_{Ti} \cap I_{Tj}|$, respectively.

Therefore, the union formula of [Equation 5] may be expressed as [Equation 6].

[Equation 6]

$$M = \sum_{i=1}^{N} n(i) - \sum_{i \neq j} n(i,j) + \sum_{i \neq j \neq k} n(i,j,k) + \cdots + (-1)^{N-1} n(1,2,\cdots,N)$$

$$= r - \sum_{i \neq j} \frac{\min(n(i), n(j))}{\alpha} + \sum_{i \neq j \neq k} \frac{\min(n(i), n(j), n(k))}{\alpha^2} + \cdots + (-1)^{N-1} \frac{\min\limits_{i \in \{1, 2, \cdots, N\}} n(i)}{\alpha^{N-1}}$$

In [Equation 6], M represents the total number of SR indexes, i.e., the length of a full SR. In [Equation 6], if M, which is the total number of SR indexes, N, which is the number of tasks, $D_i$, which is the difficulty of task i, and $\alpha$ are given, a specific variable r in [Equation 1] may be determined. Furthermore, once the specific variable r is obtained, the number of task-specific SR indexes for each task may be calculated.

In the same manner as described above, an example of the process of determining the number of task-specific SR indexes for three tasks is described below.

Assume that the difficulties of each of the three tasks are $D_1=0.7$, $D_2=0.2$, $D_3=0.1$, the system parameter $\alpha$ is 2, and the length M of the full SR is 100. In this case, based on [Equation 1], n(1)=0.7r, n(2)=0.2r, and n(3)=0.1r are obtained, and based on [Equation 2] and [Equation 3], n(1,2)=0.1r, n(2,3)=0.05r, n(1,3)=0.05r, and n(1,2,3)=0.025r are obtained. In addition, based on the union formula of [Equation 5] and/or [Equation 6], M=100-0.825r is obtained. Therefore, r becomes $121.12 \cong 121$, and the SR index set for each task may be represented as in [Table 4]. [Table 4] shows the number of task-specific SR indexes.

[Table 4]

| Type | Value |
|---|---|
| n(1) | 85 |
| n(2) | 24 |
| n(3) | 12 |
| n(1,2) | 12 |
| n(2,3) | 6 |
| n(1,3) | 6 |
| n(1,2,3) | 3 |

[Table 4] shows that the number of task-specific SR indexes assigned to Task 1 is 85, the number of task-specific SR indexes assigned to Task 2 is 4, and the number of task-specific SR indexes assigned to Task 3 is 12. In addition, [Table 4] shows that the number of shared SRs of Task 1 and Task 2 is 12, the number of shared SRs of Task 2 and Task 3 is 6, the number of shared SRs of Task 1 and Task 3 is 6, and the number of shared SRs of Task 1, Task 2, and Task 3 is 3.

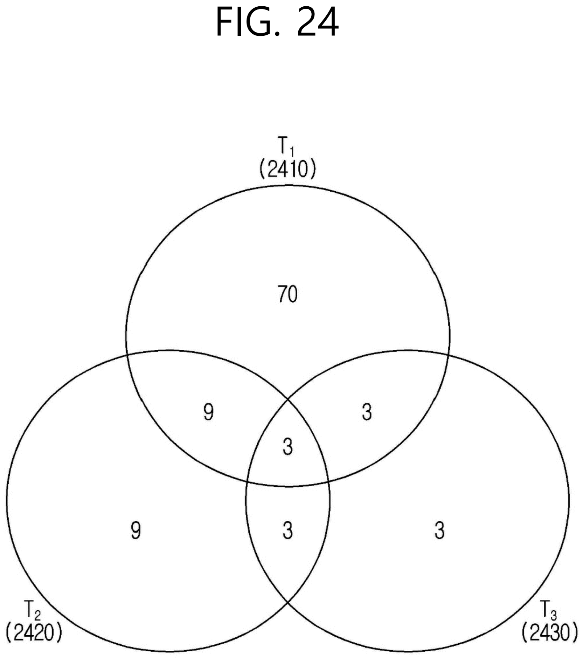

The task-specific SR indexes of [Table 4] may be represented by a Venn diagram as in FIG. 24. FIG. 24 shows an example of a Venn diagram of SR index based on an embodiment of the present disclosure. FIG. 24 shows SR index distributions among tasks $T_1$ 2410, $T_2$ 2420, and $T_3$ 2430. Referring to FIG. 24, it may be seen that there are a total of 85 task-specific SR indexes of $T_1$ 2410, of which 70 are private SR indexes of $T_1$ 2410, 9 are shared SR indexes shared with $T_2$ 2420, 3 are shared SR indexes shared with $T_3$ 2430, and 3 are shared SR indexes shared with both $T_2$ 2420 and $T_3$ 2430. Additionally, it may be seen that there are a total of 24 task-specific SR indexes of $T_2$ 2420, of which 9 are private SR indexes of $T_2$ 2420, 9 are shared SR indexes shared with $T_1$ 2410, 3 are shared SR indexes shared with $T_3$ 2430, and 3 are shared SR indexes shared with both $T_1$ 2410 and $T_3$ 2430. Additionally, it may be seen that there are a total of 12 task-specific SR indexes of $T_3$ 2430, of which 3 are private SR indexes of $T_3$ 2430, 3 are shared SR indexes shared with $T_1$ 2410, 3 are shared SR indexes shared with $T_2$ 2420, and 3 are shared SR indexes shared with both $T_1$ 2410 and $T_2$ 2420.

As described above, once the number of task-specific SR indexes for each task is determined, the determined number of SR elements may be designated for each task regardless of the positions of the SR elements. For example, if configuring the SR indexes based on [Table 4] and FIG. 24, the SR indexes of each of the plurality of tasks may be configured as in [Table 5].

[Table 5] shows an example of configuring the SR index set for each of plurality of tasks.

[Table 5]

| Type | Index |
|---|---|
| Shared SR for Task 1,2,3 | {1, 2, 3} |
| Shared SR for Task 1,2 | {4, 5, ..., 12} |
| Shared SR for Task 2,3 | {13, 14, 15} |
| Shared SR for Task 1,3 | {16, 17, 18} |
| Private SR for Task 1 | {19, 20, ..., 88} |
| Private SR for Task 2 | {89, 90, ..., 97} |
| Private SR for Task 3 | {98, 99, 100} |

Table 5 shows that among the 100 SR elements, SR elements with indexes 1, 2, 3 are configured as shared SRs of $T_1$, $T_2$, and $T_3$, SR elements with indexes 4 to 12 are configured as shared SRs of $T_1$ and $T_2$, SR elements with indexes 13, 14, and 15 are configured as shared SRs of $T_2$ and $T_3$, and SR elements with indexes 16, 17, and 18 are configured as shared SRs of $T_1$ and $T_3$. In addition, SR elements with indexes 19 to 88 are configured as private SRs of $T_1$, SR elements with indexes 89 to 97 are configured as private SRs of $T_2$, and SR elements with indexes 98 to 100 are configured as private SRs of $T_3$. The index configuration order as shown in [Table 5] is merely an example, and embodiments of the present disclosure are not limited thereto.

Based on an embodiment, the SR index set of a plurality of tasks may be configured based on the similarity between the tasks. For example, if the similarity between tasks $i_1$, $i_2$, ...task $i_k$ is expressed as $S(i_1, i_2, ...i_K)$, the SR index set of a plurality of tasks may be configured to satisfy $n(\eta_1):n(\eta_2): \cdots : n(\eta_{2N-1}) = S(\eta_1):S(\eta_2): \cdots : S(\eta_{2N-1})$, $\eta_i \in 2^U$. Here, when i=1, 2, ..., N, S(i)=$D_i$ is satisfied, U={$i_1$, $i_2$, ...$i_N$}, and $2^U$ denotes a power set of U. In addition, n({$i_1$, $i_2$, ...$i_k$})= n($i_1$, $i_2$, ...$i_k$), S({$i_1$, $i_2$, ...$i_k$})=S($i_1$, $i_2$, ...$i_k$).

Training Scheme for Semantic Representation Adaptation

Based on an embodiment of the present disclosure, a semantic encoder and a semantic decoder may be trained by adaptively changing the length of a transmitted and received SR based on a SR index set determined as described above. The semantic encoder and the semantic decoder may be trained based on a method of inputting a processed SR obtained by configuring the remaining SR elements except the task-specific SR of a specific task among the outputs of the semantic encoder for source data to dummy values (e.g., 0) to the semantic decoder, and backpropagating the output values obtained from the semantic decoder. Hereinafter, at least one operation and/or function for training the semantic encoder and the semantic decoder for SR adaptation may be performed in a model training device, for example, a RAN node, a network node, an OAM of a network operator, or a UE as described in FIG. 14.

Specifically, when the number of tasks is N, the length of the full SR is M, and the SR index set of tasks i is $I_{Ti}$, the training procedure of the semantic encoder and the semantic decoder is as follows. First, a semantic representation $\phi_\theta(x)$ for source data x is obtained using a semantic encoder $\phi_\theta(\cdot)$, and a result z is obtained by configuring $\phi_\theta(x)[k] = 0$ for $k \notin I_{Ti}$ among the semantic representation $\phi_\theta(x)$. Here, $\phi_\theta(x)[k]$ means the k-th element of the semantic representation $\phi_\theta(x)$. Subsequently, a decoding result $\varphi_\theta(z)$ is obtained by inputting the result z to a semantic decoder $\varphi_\theta(\cdot)$, and back-propagation may be performed based on the decoding result $\varphi_\theta(z)$. At this time, a loss function may be determined based on the type of task. For example, if training for a classification task is performed, a cross-entropy loss function may be utilized. The semantic encoder trained in the same manner generates and transmits at least one task-specific SR based on the source data, and the semantic decoder may perform at least one downstream task based on the received at least one task-specific SR.

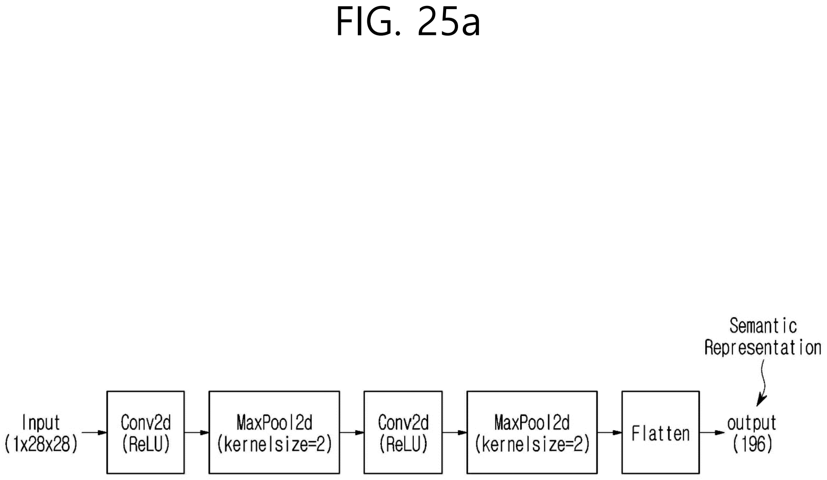

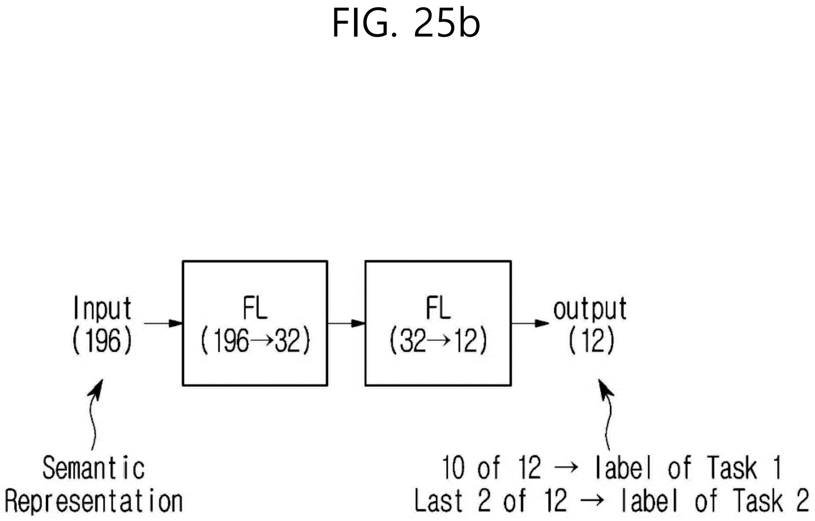

To help understanding of learning for SR adaptation as described above, a training technique for a semantic encoder and a semantic decoder for a case of two tasks will be described as an example with reference to FIGs. 25a and 25b. FIG. 25a shows an example of a semantic encoder structure based on an embodiment of the present disclosure, and FIG. 25b shows an example of a semantic decoder structure based on an embodiment of the present disclosure. The semantic encoder includes Conv2d, MaxPool2d, Conv2d, MaxPool2d, and Flatten, and the semantic decoder may include a plurality of fully-connected Layer (FL) blocks. Here, Conv2D performs a two-dimensional convolution operation on an input image, and MaxPool2d performs a task of pooling maximum values for input spatial data and may flatten the input data to one dimension. FIG. 25a and FIG. 25b are only exemplary structures, and embodiments of the present disclosure are not limited thereto, and semantic encoders and/or semantic decoders based on various embodiments may have different structures.

Based on an embodiment, the data used for training the semantic encoder and semantic decoder is the MNIST data set, and the length of the full SR is assumed to be 196 (M=196). The MNIST data set includes handwritten images representing digits 0 to 9, and each image is a black and white image of 28×28 pixels.

For example, the first task $T_1$ is a task of classifying the MNIST dataset into digits 0 to 9, and the second task $T_2$ is a task of classifying the MNIST dataset into even and odd numbers. The length of the output of the semantic decoder is 12, and the 1st to 10th elements of the output represent labels for $T_1$, and the 11th and 12th elements of the output represent labels for $T_2$. In addition, among the 196 SR elements, the SR elements with indexes 1 to 175 represent task-specific SRs for $T_1$, and the SR elements with indexes 151 to 196 represent task-specific SRs for T2. That is, $I_{T1}$ = {1,2, $\cdots$ ,175}, $I_{T2}$ = {151,152, $\cdots$ ,196}. Here, the SR elements with indexes 151 to 175 are shared SRs of $T_1$ and $T_2$. In addition, for learning, the parameters configured as Max epoch=3, training iteration=5, learning rate=0.001, optimizer-Adam optimizer, Device=GPU, Batch size=100, loss function=Cross entropy loss were used.

Specifically, for training the model, a processed SR is generated by configuring all SR elements except the task-specific SR corresponding to the task being trained to 0 among the full SR of length 196 generated using the semantic encoder as shown in FIG. 25a. Then, the processed SR is input to the semantic decoder as shown in FIG. 25b, and training of the semantic encoder and the semantic decoder may be performed by performing backpropagation based on the loss calculated based on the output of the decoder. For example, for training for $T_1$, the remaining SR elements except the SR elements with indexes 1 to 175 among the 196 SR elements, i.e., the SR elements with indexes 176 to 96, may be configured to 0. As another example, for training on $T_2$, the remaining SR elements, excluding the SR elements with indexes 151 to 196 among the 196 SR elements, i.e., the SR elements with indexes 1 to 150, may be configured to 0. Training for each task may be performed alternately.

[Table 6] shows the performance of the semantic encoder and decoder trained using the proposed method.

[Table 6]

|  | Specific SR | Full SR | Shared SR | Other Specific SR | Other Private SR |
|---|---|---|---|---|---|
| Task1 | 96.42($\pm$0.67) | 94.41($\pm$2.69) | 24.61($\pm$8.36) | 33.28($\pm$7.91) | 12.77($\pm$2.29) |
| Task2 | 95.13($\pm$0.27) | 88.79($\pm$4.51) | 77.15($\pm$3.37) | 82.18($\pm$7.09) | 63.66($\pm$7.41) |
| Task 1&2 |  | 85.07($\pm$4.63) |  |  |  |

In [Table 6], 'Specific SR' refers to the performance when only the task-specific SR corresponding to each task is input to the semantic decoder, and 'Full SR' refers to the performance when the full SR is input to the decoder regardless of the task. In addition, 'Shared SR' refers to the performance when only the shared SR is input to the semantic decoder, 'Other Specific SR' refers to the performance when the task-specific SR of another task that is not the task to be performed, i.e., the counter task, is input to the semantic decoder, and 'Other Private SR' refers to the performance when only the private SR of the counter task is input to the semantic decoder. Each performance is a value represented by averaging the results of multiple simulations, and the $\pm$ value in parentheses represents a standard deviation.

Referring to [Table 6], it is confirmed that the downstream task performance of the semantic decoder for task-specific SR is the best. In addition, if 'Full SR' is input to the semantic decoder, the performance deteriorates slightly compared to when only task-specific SR is input, but the performance for performing Task 1 and Task 2 simultaneously is 85.07%, representing normal operation. In addition, the performance is shown to be the worst when 'Other Private SR' is input to the semantic decoder. This means that the private SR of each task does not include the semantic information of other tasks.

[Table 7] shows the performance of the semantic encoder and semantic decoder when the shared SR sizes of the first and second tasks in [Table 6] are increased. That is, for $I_{T1} = \{1, 2, \cdots, 190\}$ and $I_{T2} = \{151, 152, \cdots, 196\}$, the performance of the learned semantic encoder and decoder is shown in a situation where the shared SR is increased and the private SR of $T_2$ is reduced compared to [Table 6].

[Table 7]

|  | Specific SR | Full SR | Shared SR | Other Specific SR | Other Private SR |
|---|---|---|---|---|---|
| Task1 | 96.48($\pm$0.81) | 95.58($\pm$1.04) | 35.88($\pm$10.15) | 41.49($\pm$12.03) | 11.94($\pm$3.17) |
| Task2 | 94.84($\pm$0.71) | 89.20($\pm$4.82) | 85.70($\pm$7.16) | 87.15($\pm$5.30) | 66.12($\pm$9.50) |
| Task 1&2 |  | 85.61($\pm$4.80) |  |  |  |

Referring to [Table 7], the performance for task-specific SR and 'Full SR' is similar to that in [Table 6]. In addition, the performance for Shared SR is improved compared to that in [Table 6]. That is, referring to [Table 6] and [Table 7], it can be seen that the performance for Shared SR improves as the size of the Shared SR increases.

Semantic Communication based on Semantic Representation Adaptation

Based on an embodiment of the present disclosure, semantic communication based on SR adaptation may be performed using a semantic encoder and a semantic decoder trained for SR adaptation with an assigned task-specific SR index as described above.

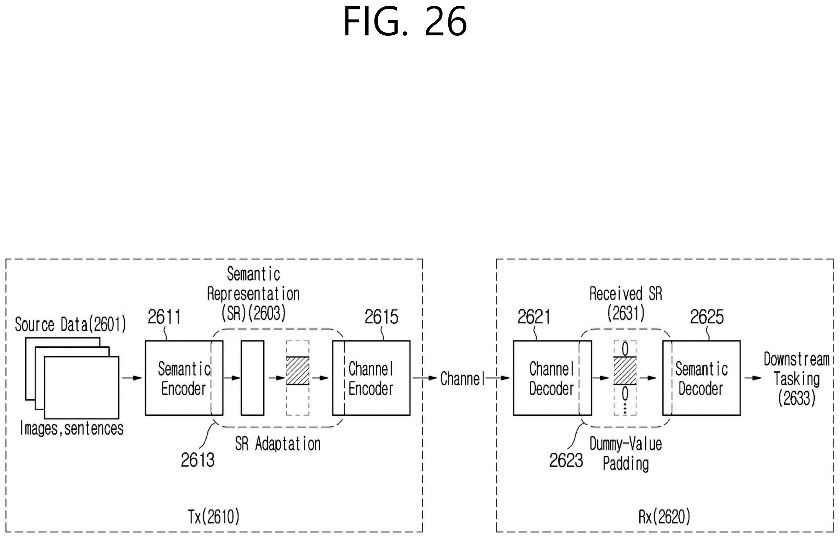

FIG. 26 shows an example of a semantic communication framework utilizing SR adaptation based on an embodiment of the present disclosure. FIG. 26 shows a functional structure for semantic communication between a transmitting device 2610 and a receiving device 2620.

Referring to FIG. 26, in the semantic communication system, the transmitting device 2610 includes a semantic encoder 2611, an SR adaptation module 2613, and a channel encoder 2615.

A semantic encoder 2611 generates a semantic representation 2603 including semantic information of the source data 2601 by encoding the source data 2601 to be transmitted. The generated SR is a full SR for a plurality of tasks, and may include task-specific SRs related to each of the plurality of tasks. For example, the full SR may include a plurality of SR elements having different indexes, and each of the plurality of SR elements may be configured as a task-specific SR related to at least one task. In addition, the full SR may include a private SR for a specific task, and/or a shared SR shared by at least two tasks.

The SR adaptation module 2613 may select at least one SR element to be transmitted to the receiving device 2620 from among a plurality of SR elements included in the full SR. For example, the SR adaptation module 2613 may generate the SR to be transmitted by selecting at least one task-specific SR related to a task to be performed in the receiving device 2620 based on task information obtained from the receiving device 2620. The SR adaptation module 2613 may identify and select at least one task-specific SR related to the task to be performed from among the full SRs based on a SR index set assigned to the task to be performed. The task information may include at least one of information indicating a task to be performed in the receiving device 2620, priority information for tasks to be performed in the receiving device 2620, or priority information for a plurality of tasks supported by the receiving device 2620. Based on an embodiment, the task information may be obtained through an initialization procedure for semantic communication between the transmitting device 2610 and the receiving device 2620, or may be obtained from the receiving device 2620 after the initialization procedure for semantic communication. Alternatively, the task information may be obtained periodically from the receiving device 2620 or may be obtained upon occurrence of a specified event. Based on an embodiment, if task-specific SRs for each of a plurality of tasks are selected, the SR adaptation module 2613 may control the transmission order of the selected task-specific SRs based on the priorities of the plurality of tasks.

The channel encoder 2615 performs channel encoding for the selected task-specific SRs. The channel encoding may be performed based on a technique (e.g., low density parity code (LDPC), polar code) adopted in the system to which the transmitting device 2610 and the receiving device 2620 belong. The channel-encoded data is transmitted to the receiving device 2620 through a wireless channel.

The receiving device 2620 corresponding to the destination includes a channel decoder 2621, a dummy-value padding module 2623, and a semantic decoder 2625.

A channel decoder 2621 decodes a signal received through a wireless channel to reconstruct at least one task-specific SR. The reconstructed at least one task-specific SR may include a full SR related to a plurality of tasks supported by the receiving device 2620, or at least one task-specific SR related to at least one task indicated by the receiving device 2620.

The dummy-value padding module 2623 replaces the value of at least one of the SR elements for at least one task other than the task to be performed with a dummy value. That is, if at least one task-specific SR reconstructed from the channel decoder 2621 is received, the dummy-value padding module 2623 identifies a task-specific SR related to the task to be performed based on the task-specific SR index of the task to be performed, and pads the values of the remaining SR elements excluding the identified task-specific SR with dummy values. The semantic decoder 2625 performs at least one downstream task based on at least one task-specific SR input from the dummy-value padding module 2623.

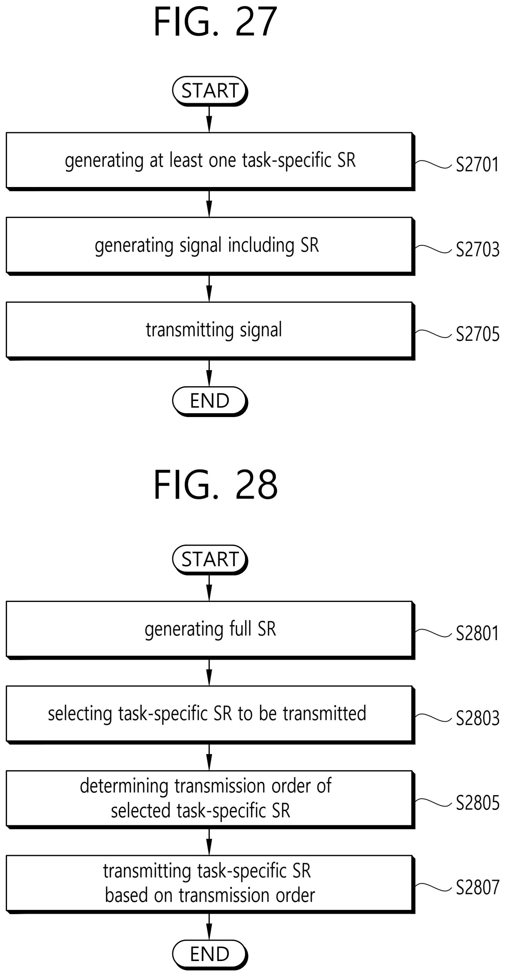

FIG. 27 shows an example of a procedure for transmitting a signal based on an embodiment of the present disclosure. FIG. 27 shows an operation method of a device transmitting a source (e.g., a transmitting device 2610). In the description referring to FIG. 27, the device transmitting the source is referred to as a first device, and the device receiving the source is referred to as a second device.

Referring to FIG. 27, in step S2701, the first device generates at least one task-specific SR. For example, the first device may generate a full SR including at least one task-specific SR related to at least one task supported by the second device by encoding source data using a semantic encoder. The full SR may include task-specific SRs related to a plurality of tasks, and the task-specific SR related to each of the plurality of tasks may be determined by a SR index set for the plurality of tasks, which are configured based on the difficulties of the plurality of tasks.

In step S2703, the first device generates a signal including an SR. Specifically, the first device may generate a signal including a full SR, or a signal including only at least one task-specific SR related to at least one task indicated by the second device among the full SRs. For example, the first device may generate a signal including a modulation symbol corresponding to the full SR or at least one task-specific SR related to at least one task indicated by the second device. To this end, the first device may generate at least one codeword by encoding information bits corresponding to the full SR or at least one task-specific SR related to at least one task indicated by the second device, perform scrambling on bits within the at least one codeword, and modulate the scrambled bits to generate modulation symbols. In other words, the first device may generate a signal including an SR by performing at least one of channel encoding, scrambling, modulation.

In step S2705, the first device transmits a signal. For example, the first device may map the signal to resources allocated for semantic communication with the second device and transmit the signal through a wireless channel. For example, the first device may perform resource mapping and waveform modulation (e.g., OFDM modulation), perform analogization and RF processing on the waveform-modulated signal, and then transmit the signal. Additionally, although not shown in FIG. 27, prior to transmitting data, the first device may transmit or receive information related to resources allocated for transmitting a signal including the SR.

Based on the embodiment described with reference to FIG. 27, a first device may transmit an SR to a second device. Here, the first device and the second device may be a UE and a base station, a base station and a UE, or a UE and a UE. For example, if the first device and the second device are a UE and a base station, the first device may perform at least one operation of receiving a synchronization signal, receiving system information, receiving control information, and receiving data before transmitting a signal including the SR. Here, the control information may include at least one of configuration information (e.g., MAC CE or RRC configuration) and downlink control information (DCI) for allocating resources. Here, the configuration information may include configuration information unrelated to semantic communication or configuration information related to semantic communication.

FIG. 28 shows an example of a procedure for transmitting a semantic representation based on an embodiment of the present disclosure. Based on an embodiment, the procedure for transmitting the semantic representation of FIG. 28 may be understood as the specific procedure of FIG. 27. In the description referring to FIG. 28, a device transmitting the source is referred to as a first device, and a device receiving the source is referred to as a second device.

Referring to FIG. 28, in step S2801, the first device generates a full SR. For example, the first device may generate a full SR including task-specific SRs related to a plurality of tasks by encoding source data using a semantic encoder.

In step S2803, the first device selects a task-specific SR to be transmitted. The first device may select the task-specific SR to be transmitted to the second device based on whether task information of the second device is received. Specifically, if task information of the second device is not received, the first device may select the full SR generated in step S2801 as the task-specific SR to be transmitted. If task information of the second device is received, the first device may select at least one task-specific SR related to at least one task indicated by the task information of the second device from among the full SRs generated in step S2801. Here, the at least one task-specific SR related to at least one task may be selected based on an SR index set assigned to at least one task.

In step S2805, the first device determines the transmission order of the selected task-specific SR. The first device may determine the transmission order of the task-specific SR based on the priorities of the tasks. Based on various embodiments, the priorities may be predefined or pre-configured, or the priorities may be determined based on a request from the second device, or based on at least one task performed by the second device. If the priorities are predefined or pre-configured, the priorities may be configured by a designer and/or an expert, or may be configured based on at least one of the difficulty of the task, the length of the task-specific SR related to the task, or the importance of the task. For example, the priority of the task may be configured relatively higher as the difficulty of the task increases, and may be configured relatively lower as the difficulty of the task decreases. The first device may control a task-specific SR related to a task having a relatively high priority to be transmitted before a task-specific SR related to a task having a relatively low priority.

In step S2807, the first device transmits the selected task-specific SR based on the determined transmission order. The first device may control the selected task-specific SR to be transmitted to the second device based on the determined transmission order.

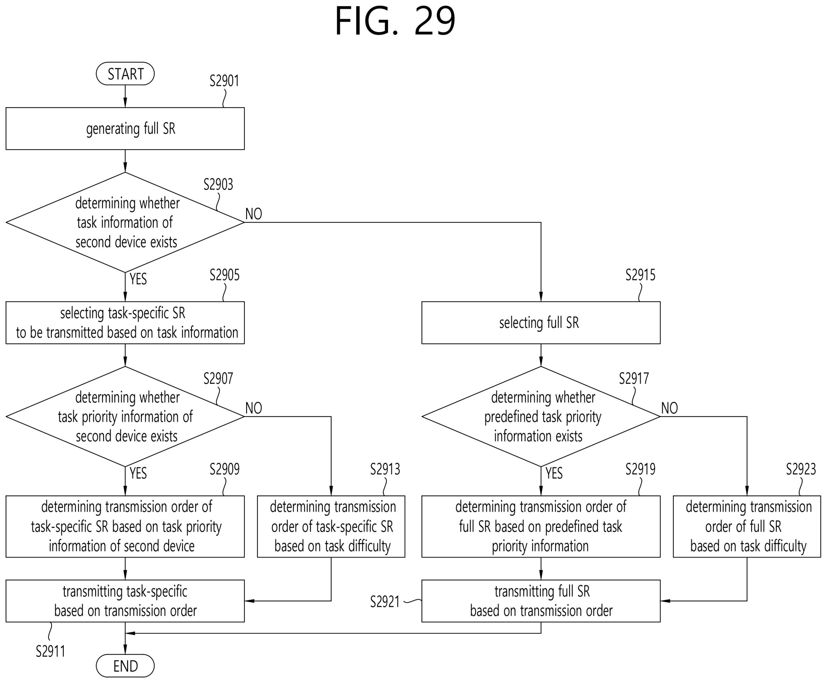

FIG. 29 shows a specific example of a procedure for transmitting a semantic representation based on an embodiment of the present disclosure. Based on an embodiment, the procedure for transmitting a semantic representation of FIG. 29 may be understood as the specific procedure of FIG. 27 and/or FIG. 28. In the description referring to FIG. 29, the device transmitting the source is referred to as the first device, and the device receiving the source is referred to as the second device. In FIG. 29, at least some operations may be performed sequentially or in parallel. For example, some operations in FIG. 29 may be performed at least temporarily at the same time.

Referring to FIG. 29, in step S2901, the first device generates a full SR. For example, the first device may generate the full SR by encoding source data using a semantic encoder. The full SR includes a plurality of SR elements, and each of the plurality of SR elements may be a task-specific SR related to at least one task among a plurality of tasks supported by the second device.

In step S2903, the first device determines whether task information of the second device exists. For example, the first device may check whether task information has been received from the second device. The task information of the second device may be received during the initialization procedure for semantic communication with the second device, or after the initialization procedure for semantic communication has been completed. Based on an embodiment, the task information of the second device may be received at the time of occurrence of a specified event, or may be received periodically.

If task information of the second device exists, in step S2905, the first device selects a task-specific SR to be transmitted to the second device from among the full SRs based on the task information of the second device. The task information of the second device may include information indicating at least one task to be performed on the second device. The first device may identify at least one task to be performed on the second device based on the task information of the second device, and select at least one task-specific SR related to the identified at least one task from among the full SRs based on a SR index set assigned to the identified at least one task.

In step S2907, the first device determines whether task priority information of the second device exists. For example, the first device may determine whether task priority information received from the second device exists. The task priority information of the second device may be received together with information indicating at least one task to be performed on the second device by being included in the task information of the second device. The task priority information of the second device may include at least one of priority information for a plurality of tasks to be performed on the second device or priority information for a plurality of tasks supported by the second device.

If task priority information of the second device exists, in step S2909, the first device determines the transmission order of at least one selected task-specific SR based on the task priority information of the second device. For example, the first device may determine the transmission order so that a task-specific SR related to a task with a higher priority among the selected at least one task-specific SR is transmitted before a task-specific SR related to a task with a lower priority.

If the task priority information of the second device does not exist, in step S2913, the first device determines the transmission order of at least one selected task-specific SR based on the task difficulty. For example, the first device may determine the transmission order so that a task-specific SR related to a task with a high difficulty among the at least one task-specific SR selected by the second device is transmitted before a task-specific SR related to a task with a low difficulty.

In step S2911, the first device transmits a task-specific SR based on a transmission order. The first device may control the selected task-specific SR to be transmitted to the second device based on the determined transmission order.

If task information of the second device does not exist, the first device selects a full SR at step S2915. In other words, the second device may determine the full SR generated at step S2901 as the task-specific SR to be transmitted.

In step S2917, the first device determines whether predefined task priority information exists. For example, the first device may determine whether task priority information previously agreed upon with the second device exists.

If predefined task priority information exists, in step S2919, the first device determines the transmission order of the full SRs based on the predefined task priority information. For example, the first device may determine the transmission order such that at least one task-specific SR related to a high-priority task among the full SRs is transmitted before at least one task-specific SR related to a low-priority task.

If predefined task priority information does not exist, in step S2923, the first device determines the transmission order of the full SRs based on the task difficulty. For example, the first device may determine the transmission order such that at least one task-specific SR related to a task with a high difficulty among the full SRs is transmitted before at least one task-specific SR related to a task with a low difficulty.

In step S2921, the first device transmits the full SR based on the transmission order. The first device may control the full SR to be transmitted to the second device based on the determined transmission order.

In the above-described embodiment, if predefined task priority information does not exist, the first device determined the transmission order of task-specific SRs related to each task based on the difficulty of the task. However, the method for determining the transmission order of task-specific SRs is not limited thereto. For example, the first device may also determine the transmission order of task-specific SRs based on the length of the task-specific SR related to each of the plurality of tasks, or the importance of each of the plurality of tasks.

Based on an embodiment of the present disclosure, the first device may determine and/or control the transmission order of the private SR and the shared SR. For example, if there are private SRs and shared SRs among the task-specific SRs to be transmitted, and the private SRs and the shared SRs are task-specific SRs related to the same task, the first device may determine the transmission order such that the private SR is transmitted before the shared SR. As another example, if there are private SRs and shared SRs among the task-specific SRs to be transmitted, and the private SRs and the shared SRs are task-specific SRs related to different tasks with different priorities, the first device may determine the transmission order such that the shared SR is transmitted before the private SR, regardless of the priorities of the tasks. As another example, if there are private SRs and shared SRs among the task-specific SRs to be transmitted, and the private SRs and shared SRs are task-specific SRs related to different tasks with different priorities, the first device may determine the transmission order so that the SR of the task with a higher priority is transmitted before the SR of the task with a lower priority, regardless of whether the SR is a private SR or a shared SR. The transmission order of the private SR and the shared SR is merely an example, and the present disclosure is not limited thereto.

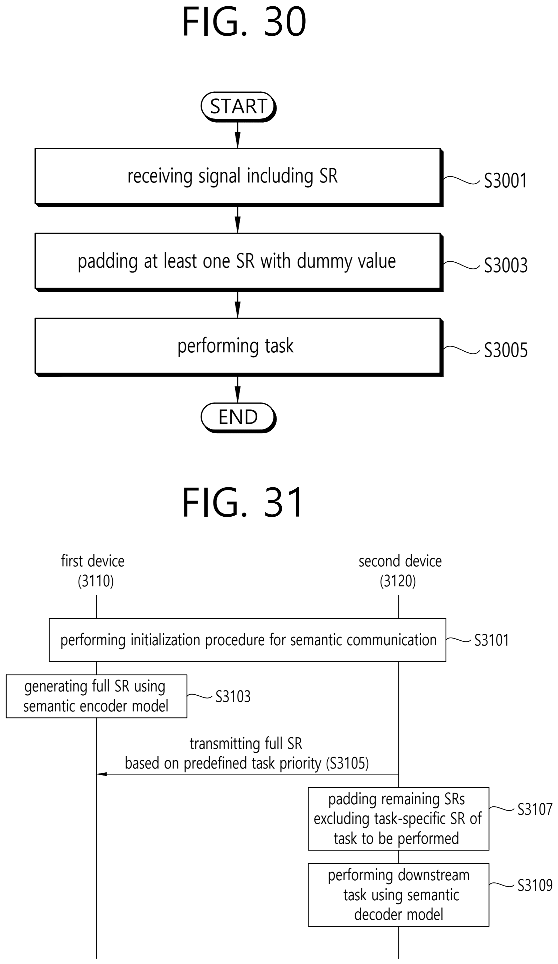

FIG. 30 shows an example of a procedure for receiving a signal based on an embodiment of the present disclosure. FIG. 30 shows an operation method of a device (e.g., a receiving device 2620) that receives a source. In the description referring to FIG. 30, the device that transmits the source is referred to as a first device, and the device that receives the source is referred to as a second device.

Referring to FIG. 30, in step S3001, a second device receives a signal including an SR. The second device may receive a signal including a modulation symbol corresponding to the SR from the first device through a wireless channel. At this time, the second device may obtain at least one codeword corresponding to the modulation symbols included in the received signal, and perform channel decoding on the at least one codeword, thereby obtaining information bits corresponding to at least one task-specific SR related to at least one task. At this time, the length of at least one task-specific SR obtained from the received signal may be less than or equal to the length of an input of the semantic decoder. Here, the length of the input is equal to the length of a full SR output from the semantic encoder of the first device. For example, the signal including the SR received by the second device may include a full SR, or may include only some SR elements of a full SR.

In step S3003, the second device pads at least one SR with a dummy value. For example, the second device may pad the remaining SRs with dummy values, except for at least one task-specific SR related to the task to be performed. The second device may select a task-specific SR related to the task to be performed in the semantic decoder from among at least one task-specific SR obtained from the signal including the SR. The second device may obtain an input SR having the same length as a full SR by padding the remaining SR elements, except for the selected task-specific SR, with dummy values (e.g., 0). However, if the signal received in step S3001 includes a full SR, step S3003 may be omitted.

In step S3005, the second device performs a task. The second device may perform at least one downstream task by inputting an input SR of the same length as the full SR to the semantic decoder.

Based on the embodiment described with reference to FIG. 30, the second device may receive an SR from the second device. Here, the first device and the second device may be a UE and a base station, a base station and a UE, or a UE and a UE. For example, if the first device and the second device are a UE and a base station, the second device may perform at least one operation of transmitting a synchronization signal, transmitting system information, transmitting control information, and transmitting data before receiving a signal including the SR. Here, the control information may include at least one of DCI for allocating resources and configuration information (e.g., MAC CE or RRC configuration). Here, the configuration information may include configuration information unrelated to semantic communication or configuration information related to semantic communication.

FIG. 31 shows an example of a semantic communication procedure between devices based on an embodiment of the present disclosure. In FIG. 31, a first device 3110 may be a transmitting device, and a second device 3220 may be a receiving device. In FIG. 31, at least some operations may be performed sequentially or in parallel. For example, some operations in FIG. 31 may be performed at least temporarily at the same time.

Referring to FIG. 31, in step S3101, the first device 3110 performs an initialization procedure for semantic communication with the second device 3120. The initialization procedure for semantic communication may include an operation for exchanging and/or sharing capability information, control information, or configuration information for semantic communication.

In step S3103, the first device 3110 generates a full SR using a semantic encoder model. That is, the first device 3110 inputs source data to be transmitted to the second device into the semantic encoder model, and may obtain a full SR including semantic information of the source data from the semantic encoder model.

In step S3105, the first device 3110 transmits a full SR based on a predefined task priority. For example, the first device 3110 may transmit the full SR to the second device 3120, sequentially transmitting the full SR in the order of task-specific SRs related to predefined high priority tasks.

In step S3107, the second device 3120 pads the remaining SRs, excluding the task-specific SRs related to the task to be performed, with dummy values. For example, the second device 3120 may maintain the values of the task-specific SRs related to the task to be performed among the full SRs as is, and pad the values of the remaining SRs with 0.

In step S3109, the second device 3120 performs a downstream task using the semantic decoder model. For example, the second device 3120 may input at least one remaining SRs padded with the dummy value and the task-specific SR related to the task to be performed into the semantic decoder model, and perform the task to be performed using the semantic decoder model.

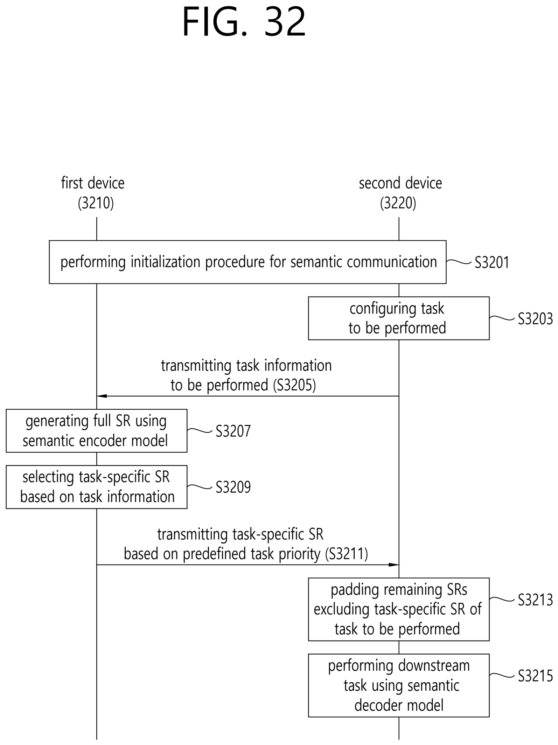

FIG. 32 shows another example of a semantic communication procedure between devices based on an embodiment of the present disclosure. In FIG. 32, a first device 3210 may be a transmitting device, and a second device 3220 may be a receiving device. In FIG. 32, at least some operations may be performed sequentially or in parallel. For example, some operations in FIG. 32 may be performed at least temporarily at the same time.

Referring to FIG. 32, in step S3201, the first device 3210 performs an initialization procedure for semantic communication with the second device 3220. The initialization procedure for semantic communication may include an operation for exchanging and/or sharing capability information, control information, or configuration information for semantic communication.

In step S3203, the second device 3220 configures a task to be performed. For example, the second device 3220 determines at least one task to be performed among a plurality of tasks supported by the semantic decoder of the second device 3220.

In step S3205, the second device 3220 transmits task information. For example, the second device 3220 may transmit task information including information indicating at least one task to be performed by the second device 3220 to the first device 3210.

In step S3207, the first device 3210 generates a full SR using a semantic encoder model. That is, the first device 3210 inputs source data to be transmitted to the second device into the semantic encoder model, and may obtain a full SR including semantic information of the source data from the semantic encoder model.

In step S3209, the first device 3210 selects a task-specific SR based on task information. For example, the first device 3210 confirms information indicating at least one task that the second device 3220 intends to perform from the task information received from the second device 3220, and may select at least one task-specific SR related to the at least one task that the second device 3220 intends to perform among a complete SR.

In step S3211, the first device 3210 transmits a task-specific SR based on a predefined task priority. For example, the first device 3210 may transmit at least one selected task-specific SR to the second device 3220, in the order of task-specific SRs related to tasks with a predefined higher priority.

In step S3213, the second device 3220 pads at least one remaining SR, excluding the task-specific SR related to the task to be performed, with a dummy value. For example, the second device 3220 may pad the value of at least one SR element that was not received from the first device 2710 with 0.

In step S3215, the second device 3220 performs a downstream task using a semantic decoder model. For example, the second device 3220 may input at least one remaining SRs padded with the dummy value and the task-specific SR related to the task to be performed into the semantic decoder model, and perform the task to be performed using the semantic decoder model.

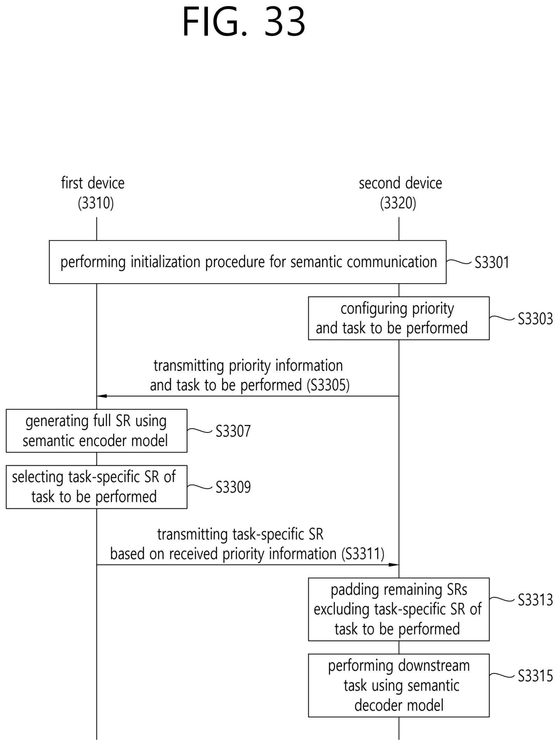

FIG. 33 shows another example of a semantic communication procedure between devices based on an embodiment of the present disclosure. In FIG. 33, a first device 3310 may be a transmitting device, and a second device 3320 may be a receiving device. In FIG. 33, at least some operations may be performed sequentially or in parallel. For example, in FIG. 28, some operations may be performed at least temporarily at the same time.

Referring to FIG. 33, in step S3301, the first device 3310 performs an initialization procedure for semantic communication with the second device 3320. The initialization procedure for semantic communication may include an operation for exchanging and/or sharing capability information, control information, or configuration information for semantic communication.

In step S3303, the second device 3320 configures the tasks to be performed and the priorities of the tasks to be performed. For example, the second device 3320 may determine at least one task to be performed among a plurality of tasks supported by the semantic decoder of the second device 3320, and configure a task priority for receiving a task-specific SR related to the determined at least one task.

In step S3305, the second device 3320 transmits information about the priority and the task to be performed. For example, the second device 3320 may transmit information indicating at least one task to be performed by the second device 3320 and priority information about at least one task to be performed to the first device 3310.

In step S3307, the first device 3310 generates a full SR using a semantic encoder model. That is, the first device 3310 inputs source data to be transmitted to the second device into the semantic encoder model, and may obtain a full SR including semantic information of the source data from the semantic encoder model.

In step S3309, the first device 3310 selects a task-specific SR related to a task to be performed by the second device 3320. For example, the first device 3310 may select at least one task-specific SR related to at least one task to be performed by the second device 3320 from among the full SRs based on the performance task information received from the second device 3320.

In step S3311, the first device 3310 transmits a task-specific SR based on the task priority received from the second device 3320. For example, the first device 3310 may transmit at least one selected task-specific SR to the second device 2820, in the order of the task-specific SRs related to the highest priority tasks received from the second device 3320.

In step S3313, the second device 3320 pads at least one remaining SR, excluding the task-specific SR related to the task to be performed, with a dummy value. For example, the second device 3320 may pad the value of at least one SR element that was not received from the first device 3310 with 0.

In step S3315, the second device 3320 performs a downstream task using a semantic decoder model. For example, the second device 3320 may input at least one remaining SRs padded with dummy value and the task-specific SR related to the task to be performed into the semantic decoder model, and perform the task to be performed using the semantic decoder model.

As described above, in a semantic communication system supporting unified multitasking, a transmitting device may adaptively control the size and/or transmission order of semantic representations to be transmitted based on task information to be performed by a receiving device. Furthermore, each of the transmitting device and the receiving device may perform semantic communication based on SR adaptation using a task-specific SR index set configured based on the difficulty of the task, and a semantic encoder and semantic decoder trained based on the configured task-specific SR index set. Through this, the transmitting device and the receiving device may increase the communication efficiency of the semantic communication system supporting unified multitasking.

Based on the various embodiments described above, devices may variably transmit and receive SR. In order to perform semantic communication using SR, sharing of background knowledge is required. In this case, if multiple knowledge sets for background knowledge are defined, it may be configured which knowledge set is used to perform semantic communication. To this end, various parameters for semantic communication, such as knowledge sets applied through signaling in a layer that controls the overall protocol (e.g., RRC layer), a layer that manages transmission media (e.g., MAC layer), may be configured. In other words, the base station may determine the parameters necessary for performing semantic communication and transmit the determined parameters through upper layer signaling.

Additionally, if a connection, flow, or session is established for semantic communication between devices, a separate layer may be defined to map at least one knowledge set to the session, etc. Accordingly, information related to the mapped knowledge set may be transmitted through signaling from a higher layer, and further, information necessary for accessing the mapped knowledge set may be transmitted. At least one knowledge set may be predefined. Alternatively, at least one knowledge set may be stored and managed by a network node within the core network and provided to the relevant devices upon session establishment.

Furthermore, since semantic communication is performed based on the transmission of SR, a hybrid automatic repeat request (HARQ) procedure considering the properties of SR may be defined. To this end, fields related to HARQ for SR may be defined in control information (e.g., DCI) of the physical layer. In addition, the control information of the physical layer may further comprise at least one field related to semantic communication.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

## INDUSTRIAL AVAILABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a first device in a wireless communication system, the method comprising:

   receiving a synchronization signal;
   receiving control information from a second device;
   transmitting, as at least one task-specific semantic presentation (SR) related to at least one task indicated by the second device among SRs generated by an encoder supporting a plurality of tasks, at least one processed SR based on an index for the at least one task to the second device.

2. The method of claim 1, wherein the index for the at least one task is determined based on at least one of a difficulty of each of the plurality of tasks or a similarity between the plurality of tasks.

3. The method of claim 2, wherein the difficulty of each of the plurality of tasks is determined based on an accuracy of task.

4. The method of claim 2, wherein the index for the at least one task is determined further based on at least one of a number of the plurality of tasks, or a total length of the SRs generated using the encoder.

5. The method of claim 1, wherein the at least one task-specific SR is transmitted based on an order determined based on priorities of the plurality of tasks.

6. The method of claim 5, wherein the priorities of the plurality of tasks are determined based on at least one of information received from the second device, a difficulty of each of the plurality of tasks, a task-specific SR length related to each of the plurality of tasks, or an importance of each of the plurality of tasks.

7. The method of claim 1, further comprising:

   generating information bits,
   wherein the generation of the information bits comprises: selecting at least one task-specific SR related to at least one task indicated by the second device among SRs generated by the encoder; and determining the at least one task-specific SR selected among the generated SRs as the information bits.

8. The method of claim 1, wherein the encoder is trained based on a method of adaptively changing a length of SR to be transmitted to a decoder corresponding to the encoder,
wherein the length of SR is adaptively changed by configuring remaining SRs, excluding at least one task-specific SR related to at least one designated task among the SRs generated by the encoder, to dummy values.

9. A method performed by a second device in a wireless communication system, the method comprising:

transmitting a synchronization signal;
transmitting system information;
transmitting control information to a first device;
transmitting a data signal to the first device;
receiving, as at least one task-specific semantic presentation (SR) related to at least one task indicated by the second device among SRs generated by the first device supporting a plurality of tasks, at least one processed SR based on an index for the at least one task from the first device.

10. The method of claim 9, further comprising:

generating, based on the at least one task-specific SR, an SR having a length equal to that of a full SR: and
performing, based on the generated SR, the at least one task.

11. The method of claim 10, wherein the generating the SR comprises:

padding remaining SRs, excluding at least one task-specific SR related to the at least one task, with dummy values; and
inputting the at least one task-specific SR and the SRs padded with the dummy values to a decoder.

12. The method of claim 11, wherein the decoder obtains an SR whose length is adaptively changed from an encoder corresponding to the decoder, and is trained based on the obtained SR,
wherein the SR length is adaptively changed by configuring remaining SRs, excluding at least one task-specific SR related to at least one designated task among the SRs generated by the encoder, to dummy values.

13. A first device in a wireless communication system, comprising:

a transceiver; and
a processor connected to the transceiver,
wherein the processor is configured to:

receive a synchronization signal;
receive control information from a second device;
transmit, as at least one task-specific semantic presentation (SR) related to at least one task indicated by the second device among SRs generated by an encoder supporting a plurality of tasks, at least one processed SR based on an index for the at least one task to the second device.

14. A second device in a wireless communication system, comprising:

a transceiver; and
a processor connected to the transceiver,
wherein the processor is configured to:

transmit a synchronization signal;
transmit control information to a first device;
receive, as at least one task-specific semantic presentation (SR) related to at least one task indicated by the second device among SRs generated by the first device supporting a plurality of tasks, at least one processed SR based on an index for the at least one task from the first device.

15. A communication device comprising:

at least one processor;

at least one computer memory connected to the at least one processor and storing instructions for instructing operations based on being executed by the at least one processor, wherein the operations comprise:

receiving a synchronization signal;
receiving control information from a second device;
transmitting, as at least one task-specific semantic presentation (SR) related to at least one task indicated by the second device among SRs generated by an encoder supporting a plurality of tasks, at least one processed SR based on an index for the at least one task to the second device.

16. A non-transitory computer-readable medium storing at least one instruction, comprising: the at least one instruction executable by a processor, wherein the at least one instruction controls a device to:

receive a synchronization signal;
receive control information from a second device;
transmit, as at least one task-specific semantic presentation (SR) related to at least one task indicated by the second device among SRs generated by an encoder supporting a plurality of tasks, at least one processed SR based on an index for the at least one task to the second device.

# FIG. 1

# FIG. 2

# FIG. 3

EP 4 742 564 A1

300

codewords

layers

| 310 | 320 | 330 | 340 | 350 | 360 |

Scrambler → Modulator → layer Mapper → Precoder → Resource mapper → Signal Generator →

Scrambler → Modulator → Resource mapper → Signal Generator →

310 320 350 360

# FIG. 4

Terminal
(410)

Base Station
(420)

synchronization (401)

System information acquisition (403)

random access (405)

control information signaling (405)

data transmission/reception (407)

# FIG. 5

# FIG. 6

EP 4 742 564 A1

FIG. 7

# FIG. 8

FIG. 9

# FIG. 10

Data signal Generator

Mainly Non-linear Elements

OAF

AF

Optical RF signal Generator

OFCG:optical frequency comb generator

Optical Modulator

O/E Converter

Antenna

# FIG. 11

Microwave contact

x
z
y

Optical
waveguide

x-cut

y
x
z

z-cut

(a)

hot

x
z
y

Optical
waveguide

x-cut

Dual-drive
hot   hot

hot

z-cut

(d)

Phase modulator

Laser

OPA

O/E Converter
Optical mixer function

Data(E)

Modulated signal

(c)

Intensity modulator

Laser

OPA

O/E Converter
Optical mixer function

Data(E)

Modulated signal

(d)

# FIG. 12

# FIG. 13

Input Layer   Hidden Layer   Output Layer

Input–hidden
Weights
$W^{d \times H}$

Hidden-output
Weights
$W^{H \times K}$

# FIG. 14

# FIG. 15

# FIG. 16

# FIG. 17

# FIG. 18

# FIG. 19

1930 — C:effectiveness

Source          (effectiveness factors)          Destination

Intended message

1920 — B:Semantic

Semantic Transmitter — Local knowledge - - - Shared knowledge - - - Local knowledge — Semantic Receiver

Semantic Noise

Expressed message

1910 — A:Technical

Transmitter — Technical message — ▨ — Receiver

Physical Channel

Technical Noise

EP 4 742 564 A1

# FIG. 20

# FIG. 21

# FIG. 22

# FIG. 23

Shared feature vectors of Task A and Task B (2331)
Private feature vectors of Task A (2311)
Private feature vectors of Task B (2321)

Last layer of encoder

Task-specific features of other tasks

Task-specific features of Task A(2310)

Task-specific features of Task B(2320)

Task-specific features of other tasks

$E_A^p$  $E_A^s$

$E_B^s$  $E_B^p$

Compute $L_a$

$E_A^{pT} E_B^p$  $E_A^{sT} E_B^s$

$$L_a = \left\| E_A^{pT} E_B^p \right\|_F - \left\| E_A^{sT} E_B^s \right\|_F$$

EP 4 742 564 A1

# FIG. 24

# FIG. 25a

EP 4 742 564 A1

Input
(1x28x28) → Conv2d
(ReLU) → MaxPool2d
(kernelsize=2) → Conv2d
(ReLU) → MaxPool2d
(kernelsize=2) → Flatten → output
(196)

Semantic
Representation

# FIG. 25b

Input (196) → FL (196→32) → FL (32→12) → output (12)

Semantic Representation

10 of 12 → label of Task 1
Last 2 of 12 → label of Task 2

EP 4 742 564 A1

# FIG. 26

Source Data(2601)

Images,sentences

2611
Semantic Encoder

2613

Semantic Representation (SR)(2603)

SR Adaptation

2615
Channel Encoder

Channel

2621
Channel Decoder

2623

Received SR (2631)

Dummy-Value Padding

2625
Semantic Decoder

Downstream Tasking (2633)

Tx(2610)

Rx(2620)

# FIG. 27

START

| generating at least one task-specific SR | S2701 |

| generating signal including SR | S2703 |

| transmitting signal | S2705 |

END

# FIG. 28

START

| generating full SR | S2801 |

| selecting task-specific SR to be transmitted | S2803 |

| determining transmission order of selected task-specific SR | S2805 |

| transmitting task-specific SR based on transmission order | S2807 |

END

# FIG. 29

EP 4 742 564 A1

# FIG. 30

```
START
  │
  ▼
┌─────────────────────────────────────────┐
│      receiving signal including SR       │ ── S3001
└─────────────────────────────────────────┘
  │
  ▼
┌─────────────────────────────────────────┐
│    padding at least one SR with dummy value   │ ── S3003
└─────────────────────────────────────────┘
  │
  ▼
┌─────────────────────────────────────────┐
│              performing task             │ ── S3005
└─────────────────────────────────────────┘
  │
  ▼
 END
```

# FIG. 31

first device (3110)                second device (3120)

| performing initialization procedure for semantic communication | ~ S3101 |

generating full SR using semantic encoder model ~ S3103

transmitting full SR
based on predefined task priority (S3105)

padding remaining SRs excluding task-specific SR of task to be performed ~ S3107

performing downstream task using semantic decoder model ~ S3109

# FIG. 32

first device
(3210)

second device
(3220)

performing initialization procedure for semantic communication — S3201

configuring task
to be performed — S3203

transmitting task information
to be performed (S3205)

generating full SR using
semantic encoder model — S3207

selecting task-specific SR
based on task information — S3209

transmitting task-specific SR
based on predefined task priority (S3211)

padding remaining SRs
excluding task-specific SR of
task to be performed — S3213

performing downstream
task using semantic
decoder model — S3215

# FIG. 33

first device
(3310)

second device
(3320)

performing initialization procedure for semantic communication — S3301

configuring priority
and task to be performed — S3303

transmitting priority information
and task to be performed (S3305)

generating full SR using
semantic encoder model — S3307

selecting task-specific SR of
task to be performed — S3309

transmitting task-specific SR
based on received priority information (S3311)

padding remaining SRs
excluding task-specific SR of
task to be performed — S3313

performing downstream
task using semantic
decoder model — S3315

## INTERNATIONAL SEARCH REPORT

| | International application No. |
|---|---|
| | **PCT/KR2023/009660** |

### A. CLASSIFICATION OF SUBJECT MATTER

**H04L 1/00**(2006.01)i; **G06F 40/30**(2020.01)i; **G06N 20/00**(2019.01)i

According to International Patent Classification (IPC) or to both national classification and IPC

### B. FIELDS SEARCHED

Minimum documentation searched (classification system followed by classification symbols)

H04L 1/00(2006.01); G06N 3/04(2006.01); G06N 3/08(2006.01); H04L 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시맨틱 통신(semantic communication), 동기 신호(synchronization signal), 태스크(task), 인코더(encoder), SR(semantic representation), 태스크-특정(task-specific) SR, 인덱스(index), 난이도(difficulty), 유사도(similarity), 학습(learn), 더미(dummy)

### C. DOCUMENTS CONSIDERED TO BE RELEVANT

| Category* | Citation of document, with indication, where appropriate, of the relevant passages | Relevant to claim No. |
|---|---|---|
| Y | HUANG, Zhenya et al. DisenQNet: Disentangled Representation Learning for Educational Questions. KDD'21: Proceedings of the 27th ACM SIGKDD Conference on Knowledge Discovery & Data Mining. 14 August 2021. See abstract; sections 1, 4.1, 4.1.1, 4.2 and 5.1; table 1; and figures 2-3. | 1-16 |
| Y | KR 10-2018-0058597 A (SAMSUNG ELECTRONICS CO., LTD.) 01 June 2018 (2018-06-01) See paragraphs [0036], [0275] and [0364]. | 1-16 |
| Y | SEO, Hyowoon et al. Semantics-native communication via contextual reasoning. arXiv:2108.05681v2. 09 March 2023. See pages 2-3; and figure 1. | 7 |
| Y | ZHU, Jason Yue et al. TextGNN: Improving Text Encoder via Graph Neural Network in Sponsored Search. arXiv:2101.06323v3. 01 May 2021. See sections 1, 3, 4.1, 4.2.2 and 5.1; and figures 2-3. | 8,11-12 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 March 2024** | **22 March 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/009660** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2023-0030233 A (INHA UNIVERSITY RESEARCH AND BUSINESS FOUNDATION) 06 March 2023 (2023-03-06)<br>See paragraphs [0004]-[0010]; and claims 1-4. | 1-16 |

Form PCT/ISA/210 (second sheet) (July 2022)

## INTERNATIONAL SEARCH REPORT
### Information on patent family members

International application No.

**PCT/KR2023/009660**

| Patent document cited in search report | | | Publication date (day/month/year) | Patent family member(s) | | | Publication date (day/month/year) |
|---|---|---|---|---|---|---|---|
| KR | 10-2018-0058597 | A | 01 June 2018 | AU | 2017-366070 | A1 | 13 June 2019 |
| | | | | AU | 2017-366070 | B2 | 02 June 2022 |
| | | | | AU | 2022-224872 | A1 | 29 September 2022 |
| | | | | AU | 2022-224872 | B2 | 17 August 2023 |
| | | | | CA | 3044947 | A1 | 31 May 2018 |
| | | | | CN | 109997328 | A | 09 July 2019 |
| | | | | CN | 109997328 | B | 03 June 2022 |
| | | | | CN | 115134863 | A | 30 September 2022 |
| | | | | EP | 3529932 | A1 | 28 August 2019 |
| | | | | EP | 3529932 | B1 | 01 September 2021 |
| | | | | EP | 3955494 | A1 | 16 February 2022 |
| | | | | ES | 2892279 | T3 | 03 February 2022 |
| | | | | JP | 2020-513700 | A | 14 May 2020 |
| | | | | JP | 2022-163094 | A | 25 October 2022 |
| | | | | JP | 7114589 | B2 | 08 August 2022 |
| | | | | JP | 7408735 | B2 | 05 January 2024 |
| | | | | KR | 10-2023-0116762 | A | 04 August 2023 |
| | | | | MX | 2019006065 | A | 12 August 2019 |
| | | | | PH | 12019501161 | A1 | 19 August 2019 |
| | | | | US | 10298362 | B2 | 21 May 2019 |
| | | | | US | 10615922 | B2 | 07 April 2020 |
| | | | | US | 10693599 | B2 | 23 June 2020 |
| | | | | US | 10880048 | B2 | 29 December 2020 |
| | | | | US | 11539467 | B2 | 27 December 2022 |
| | | | | US | 2018-0145797 | A1 | 24 May 2018 |
| | | | | US | 2019-0273582 | A1 | 05 September 2019 |
| | | | | US | 2020-0076543 | A1 | 05 March 2020 |
| | | | | US | 2020-0127770 | A1 | 23 April 2020 |
| | | | | US | 2021-0119738 | A1 | 22 April 2021 |
| | | | | WO | 2018-097658 | A1 | 31 May 2018 |
| KR | 10-2023-0030233 | A | 06 March 2023 | KR | 10-2576797 | B1 | 08 September 2023 |

Form PCT/ISA/210 (patent family annex) (July 2022)